# EUROPEAN PATENT APPLICATION

(11) **EP 1 424 804 A2**
(43) Date of publication of application: **02.06.2004**
(21) Application number: 03027373.4
(22) Date of filing: 27.11.2003
(51) Int. Cl.: H04L 9/08

(54) **Symmetric key update for encryption communication system**

(30) Priority: 29.11.2002 JP 2002348748
(71) Applicant: FUJITSU LIMITED, Kawasaki-shi, Kanagawa 211-8588 (JP)
(72) Inventor: Takase, Masaaki, Fujitsu Limited, Kawasaki-shi, Kanagawa 211-8588 (JP); Kakemizu, Mitsuaki, Fujitsu Limited, Kawasaki-shi, Kanagawa 211-8588 (JP); Igarashi, Yoichiro, Fujitsu Limited, Kawasaki-shi, Kanagawa 211-8588 (JP); Taniguchi, Hiroyuki, Fujitsu Limited, Kawasaki-shi, Kanagawa 211-8588 (JP); Yamamura, Shinya, Fujitsu Network Technolog. Ltd., Yokohama-shi, Kanagawa 222-0033 (JP); Iwamoto, Katsunori, Fujitsu Network Tech. Ltd., Yokohama-shi, Kanagawa 222-0033 (JP); Koganemaru, Hiraku, Fujitsu Network Tech. Ltd., Yokohama-shi, Kanagawa 222-0033 (JP); Wakameta, Hiroshi, Fujitsu Network Tech. Ltd., Yokohama-shi, Kanagawa 222-0033 (JP)
(74) Representative: HOFFMANN - EITLE

(57) **Abstract**

In a system for performing encryption communications using a common key updated at a predetermined timing between a key transmitting device and a key receiving device, a common key encryption communication system comprising: a key transmitting device including first retaining unit for retaining a most-updated encryption key and a one-generation-anterior encryption key as the above common keys, and first setting unit for setting a one-generation-anterior encryption key for transmission and a most-updated encryption key and a one-generation-anterior encryption key for receipt, respectively; and the above key receiving device including second retaining unit for retaining a most-updated encryption key and a one-generation-anterior encryption key as the above common keys, and second setting unit for setting a most-updated encryption key for transmission, and a most-updated encryption key and a one-generation-anterior key for receipt, respectively.

## Description

### BACKGROUND OF THE INVENTION

The present invention relates to a sharing method of a common key in the case of using an encryption system using the common key.

With developments of networks, traffics flowing on the networks are diversified. The traffic contains secret information, etc. that should not be known by others, and an encryption communication technology by IPsec, etc. is established as a means for secreting it.

In a communication system utilizing VPN (Virtual Private Network) especially, IPsec (IP security protocol) as an encryption communication system, it is prescribed that communication target terminals should mutually exchange encryption keys by utilizing IKE (Internet Key Exchange) protocol before starting the encryption communications, and that data should be encrypted/decrypted by use of this at the time of communications.

There is an anxiety that a content of the aforementioned encryption key might be decrypted by a malicious interceptor if the same key content has been utilized for a long time, and hence it is prescribed that an effective period is set in each individual key and it can not be utilized for the communications beyond this period. Therefore, the terminal in the midst of the IPsec-based VPN communications acquires an encryption key afresh by effecting the key exchange procedure once again before an expiration of the effective period concerned and periodically updates it, thereby ensuring a solidity of the encryption communications.

In a series of key exchange mechanisms described above, the encryption key retained by each terminal (an end point of the communications) is subjected to a next key exchange before an expiration of what is now in the process of communications, and it is changed over to a new key just when this key exchange is completed, thereby enabling the encryption communications to continue .

It is considered that the aforementioned mechanism has no problem in one-to-one communications, however, in a case where a multiplicity of clients perform the encryption communications with one server, it is considered that a problem is a load caused by the key exchange of the server. For solving this, there is considered, for instance, a method of distributing the key to the client from the server, however, in the case of periodically updating the key by this method, there is such a problem is that the communications are interrupted during the key distribution and in case a message for distributing the key is discarded. Namely, a recovery procedure in the event of a loss of the key when distributing the key, is not considered, which might be an anxious item on the occasion of using the VPN in combination with mobile communications.

Note that there is known what enables the exchange of the encryption keys during one session while utilizing a standard protocol as on the Internet, etc., and ensures confidentiality/secrecy of the communication data (refer to, e.g., patent document 1: Japanese Patent Application Laid-Open Publication No.2002-217896).

### SUMMARY OF THE INVENTION

An obj ect of the present invention lies in providing a technology for continuing, in case one of two devices that perform common key encryption communications distributes an encryption key to the other, the communications in the midst of a distribution procedure and even in a case where the encryption key (a key distribution message) is discarded.

The present invention is, for solving the above problems, a system for performing encryption communications using a common key updated at a predetermined timing between a key transmitting device and a key receiving device, the system comprising: a key transmitting device including first retaining for retaining a most-updated encryption key and a one-generation-anterior encryption key as the above common keys, and first setting unit setting a one-generation-anterior encryption key for transmission and a most-updated encryption key and a one-generation-anterior encryption key for receipt, respectively; and the above key receiving device including second retaining unit retaining a most-updated encryption key and a one-generation-anterior encryption key as the above common keys, and second setting unit setting a most-updated encryption key for transmission, and a most-updated encryption key and a one-generation-anterior key for receipt, respectively.

According to the present invention, each of the key transmitting device and the key receiving device retains two generations of encryption keys such as the most-updated encryption key and the one-generation-anterior encryption key as the common keys, and hence, in a case where the key transmitting device distributes the encryption keys, etc. to the key receiving device, the communications can continue in the midst of a distribution procedure and even in case the encryption key (a key distribution message) is discarded. Note that the key transmitting device is not limited to an HA on Mobile IP. For example, it may be an information processing terminal such as a server, etc. on the Internet. Further, the key receiving device is not limited to an MN on Mobile IP. For instance, itmaybe an information processing terminal communicable with the server, etc. on the Internet.

In the above common key encryption communication system, for example, the above key transmitting device further includes acquisition unit acquiring the encryption key, the above first retaining unit updates and retains the above most-updated encryption key as the one-generation-anterior encryption key and the encryption key acquired by the above acquisition unit as the most-updated encryption key, respectively, and the above first setting unit re-sets the one-generation-anterior encryption key for transmission, and the most-updated encryption key and the one-generation-anterior encryption key for receipt respectively on the basis of the retained key after being updated by the above first retaining unit.

If done in this way, the encryption key can be updated in the key transmitting device.

In the above common key encryption communication system, for example, the above key transmitting device includes generation unit generating the encryption key, and the above acquisition unit acquires the encryption key generated by the above generation unit.

If done in this way, the key transmitting device can acquire a self-generated key. Further, the key transmitting device may request an external key generation unit to generate a key and may acquire this key, or, the key may be read from a self- or externally-possessed key database, etc..

In the above common key encryption communication system, for instance, the above key transmitting device further includes first transmitting unit transmitting the encryption key acquired by the above acquisition unit to the key receiving device. A variety of timings can be considered as this transmission timing. For example, it may be transmitted in the case of receiving a predetermined message from the key receiving device, or it may be transmitted at a predetermined timing in a way that holds a self-timer.

If done in this way, there is reduced a load required for key sharing in one (the key transmitting device)-to-many (the key receiving devices) common key encryption communications.

In the above common key encryption communication system, for example, the above key receiving device further includes second receiving unit receiving he encryption key transmitted from the above key transmitting device, in case the above second receiving unit receives the encryption key, the above second retaining unit respectively updates and retains the above most-updated encryption key as the one-generation-anterior encryption key and the encryption key received by the above second receiving unit as the most-updated encryption key, and the above second setting unit respectively re-sets the most-updated encryption key for transmission, and the most-updated encryption key and the one-generation-anterior encryption key for receipt on the basis of the retained key after being updated by the above second retaining unit.

If done in this way, the encryption key can be updated in the key receiving device.

In the above common key encryption communication system, for example, the above key receiving device includes second transmitting unit transmitting a predetermined message to the key transmitting device, and the above key receiving device includes first receiving unit receiving the predeterminedmessage transmitted from the above key receiving device.

If done in this way, the key transmitting device, as triggered by a receipt of the predetermined message, can generate the key, can distribute the key, and so on.

In the above common key encryption communication system, for instance, the above first and second retaining unit respectively retain the initialization key.

If done in this way, when starting up the key receiving device (which is a state where none of the two generations of keys is set) , and even in case a response from the key transmitting device to a key update request from the key receiving device is not obtained (which is a state where the two generations of keys of the key transmitting device are lost due to a fault, etc. in the key transmitting device), the encryption by the initialization key thereof becomes possible, and therefore the encryption communications can continue.

In the above common key encryption communication system, for example, the above key receiving device transmits a key initialization requestmessage as the above predetermined message at a predetermined timing, in case the above key transmitting device receives the key initialization request message transmitted from the above key receiving device, the above acquisition unit acquires the encryption key, and the above first retaining unit respectively updates and retains the common initialization key as the one-generation-anterior encryption key and the encryption key acquired by the above acquisition unit as the most-updated encryption key.

If done in this way, the key transmitting device can initialize the self- encryption-key in accordance with the initialization request message from the key receiving device.

In the above common key encryption communication system, for instance, the above key receiving device transmits a key update request message as the above predetermined message at a predetermined timing, in case the above key transmitting device receives a key update request message transmitted from the above key receiving device, the above acquisition unit acquires the encryption key, and the above first retaining unit respectively updates and retains the above common initialization key as the one-generation-anterior encryption key and the encryption key acquired by the above acquisition unit as the most-updated encryption key.

If done in this way, the key transmitting device can update the self-encryption-key in accordance with the key update request message from the key receiving device.

In the above common key encryption communication system, for instance, the above key receiving device includes unit determining a key update timing, and said second transmitting unit, in the case of reaching the key update timing, transmits the key update request message to the key transmitting device.

If done in this way, the key receiving device can transmit the key update request message at the predetermined timing (e.g., periodically).

In the above common key encryption communication system, for example, the above key transmitting device includes unit determining a key update timing, and said first transmitting unit, in the case of reaching the key update timing, transmits the encryption key acquired by the above acquisition unit to the key receiving device.

If done in this way, the key transmitting device can transmit the encryption key by a self-judgement irrespective of the request from the key receiving device.

In the above common key encryption communication system, for instance, the above key receiving device transmits a key resending request message as the above predetermined message at a predetermined timing, and, in case the above key transmitting device receives a key resending request message transmitted from the above key receiving device, the first transmitting unit transmits the encryption key acquired by the above acquisition unit to the key receiving device.

If done in this way, the key transmitting device can transmit the encryption key in accordance with the key resending request message from the key receiving device.

In the above common key encryption communication system, for example, the above first transmitting unit, in a state where the above first and second retaining unit retain none of the keys, transmits the encryption key acquired by the above acquisition unit to the key receiving device. In this case, it follows that the communications are performed by use of the initialization key.

The present invention can be specified as a key transmitting device as follows. In a key transmitting device performing encryption communications using a common key updated at a predetermined timing with a key receiving device, a key transmitting device comprises retaining unit retaining a most-updated encryption key and a one-generation-anterior encryption key as the above common keys, and setting unit respectively setting a one-generation-anterior encryption key for transmission, and a most-updated encryption key and a one-generation-anterior encryption key for receipt.

Note that the key transmitting device is not limited to the HA on Mobile IP. For example, it may be the information processing terminal such as the server, etc. on the Internet.

Further, the present invention can be specified as a key receiving device as follows. In a key receiving device performing encryption communications using a common key updated at a predetermined timing with a key transmitting device, a key receiving device comprises retaining unit retaining a most-updated encryption key and a one-generation- anterior encryption key as the above common keys, and setting unit respectively setting a most-updated encryption key for transmission, and a most-updated encryption key and a one-generation-anterior encryption key for receipt.

Note that the key receiving device is not limited to the MN on Mobile IP. For example, it may be the information processing terminal communicable with the server, etc. on the Internet.

Moreover, the present invention can be specified as an invention of method as follows. In a method of performing encryption communications using a common key updated at a predetermined timing between a key transmitting device and a key receiving device, a common key encryption communication method is characterized in that the key transmitting device retains a most-updated encryption key and a one-generation-anterior encryption key as the above common keys, sets respectively the one-generation-anterior encryption key for transmission and for receipt, and the above key receiving device retains the most-updated encryption key and the one-generation-anterior encryption key as the above common keys, and sets respectively the most-updated encryption key for transmission and the most-updated encryption key and the one-generation-anterior encryption key for receipt.

### DESCRIPTION OF THE DRAWINGS

FIG. 1 is a diagram for explaining an outline of architecture of a common key encryption communication system in an embodiment of the present invention.
FIG. 2 is a diagram for explaining an example of architecture of a key transmitting device (HA).
FIG. 3 is a diagram for explaining an example of architecture of a key receiving device (MN).
FIG. 4 a sequence diagram for explaining a procedure of distributing a dynamic key (common key) when starting up the key receiving device (MN).
FIG. 5 is sequence diagram in which an attention is directed to the key receiving device (MN).
FIG. 6 is a sequence diagram in which the attention is directed to the key transmitting device (HA).
FIG. 7 is a sequence diagram in which the attention is directed to the key receiving device (MN).
FIG. 8 a sequence diagram for explaining a procedure of distributing the dynamic key (common key) by a key update request message from the key receiving device (MN).
FIG. 9 a sequence diagram in which the attention is directed to the key receiving device (MN).
FIG. 10 a sequence diagram in which the attention is directed to the key transmitting device (HA).
FIG. 11a sequence diagram for explaining a procedure of distributing the dynamic key (common key) by a key resending request message from the key receiving device (MN).
FIG. 12 a sequence diagram in which the attention is directed to the key receiving device (MN).
FIG. 13 a sequence diagram in which the attention is directed to the key transmitting device (HA).
FIG. 14 a sequence diagram for explaining a procedure of distributing the dynamic key (common key) by the key transmitting side device (HA) judging key updating.
FIG. 15 a sequence diagram in which the attention is directed to the key transmitting device (HA).
FIG. 16 a sequence diagram explaining a state where the key is updated in only the key transmitting device (HA).
FIG. 17 a flowchart for explaining an outline of processes in the key transmitting device (HA).
FIG. 18 a flowchart for explaining an outline of processes in the key receiving device (MN).

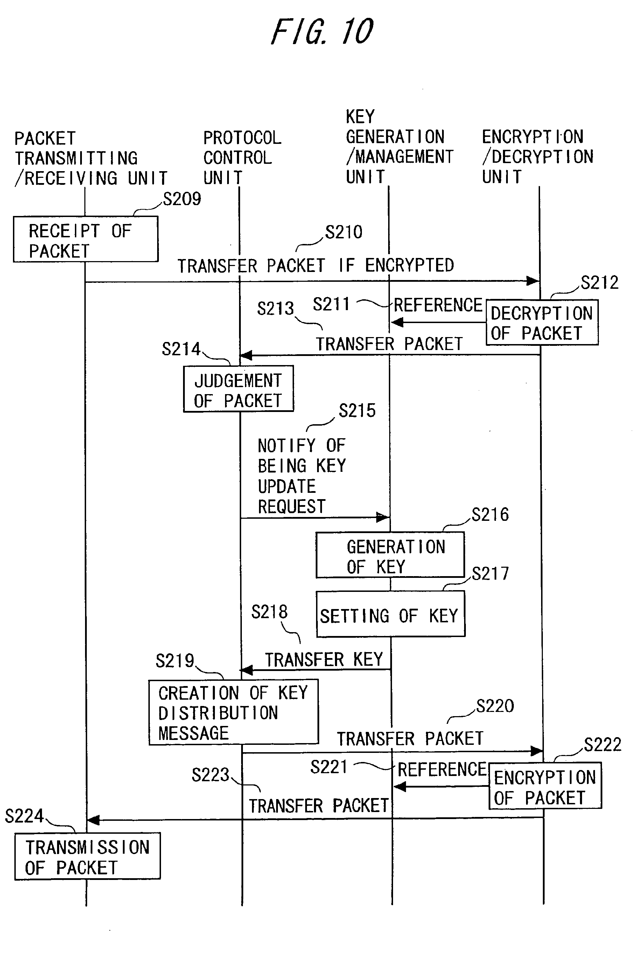

FIG. 10 a flowchart for explaining an outline of processes in the key transmitting device (HA).

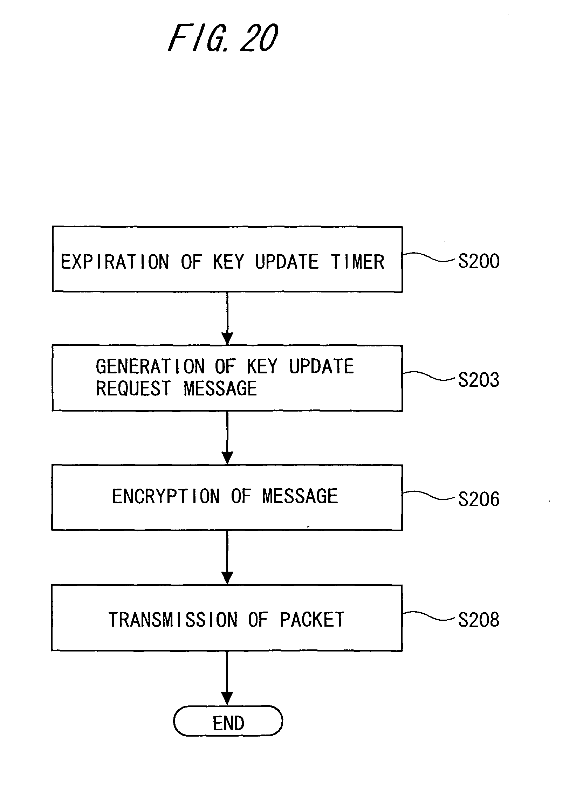

FIG. 20 a flowchart for explaining an outline of processes in the key receiving device (MN).

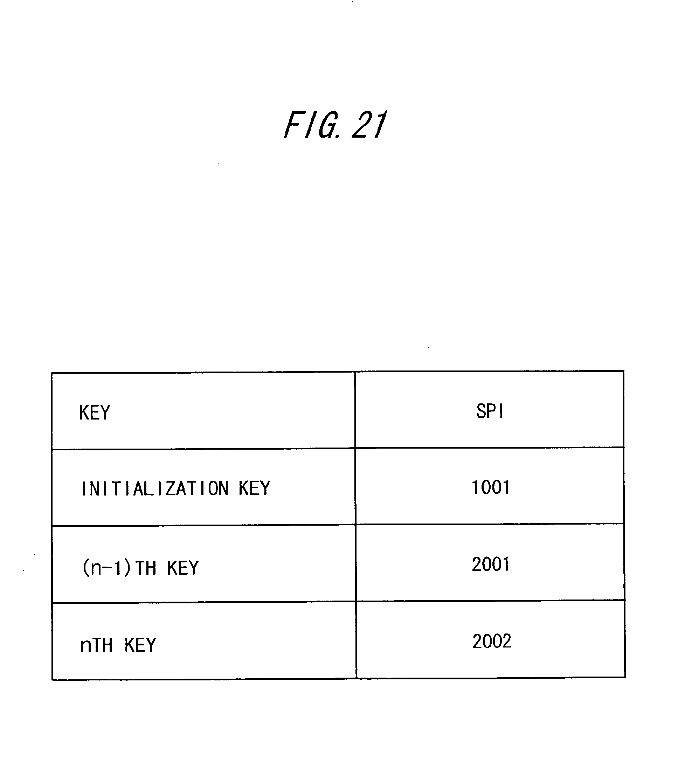

FIG. 21 a diagram for explaining an example of a key-SPI mapping table.

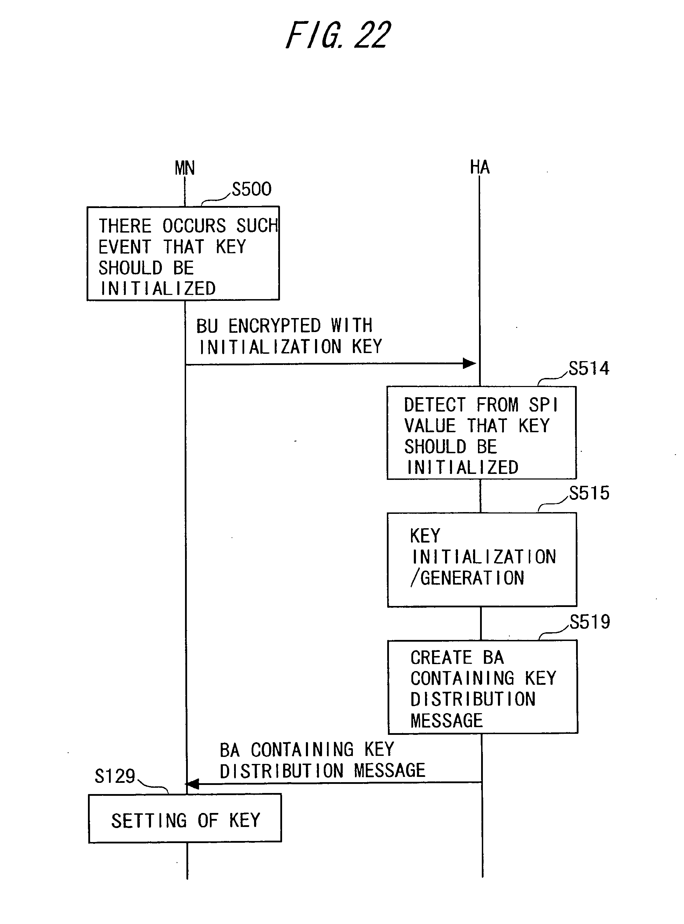

FIG. 22 a sequence diagram for explaining a procedure of distributing the dynamic key (common key) when starting up the key receiving device (MN).

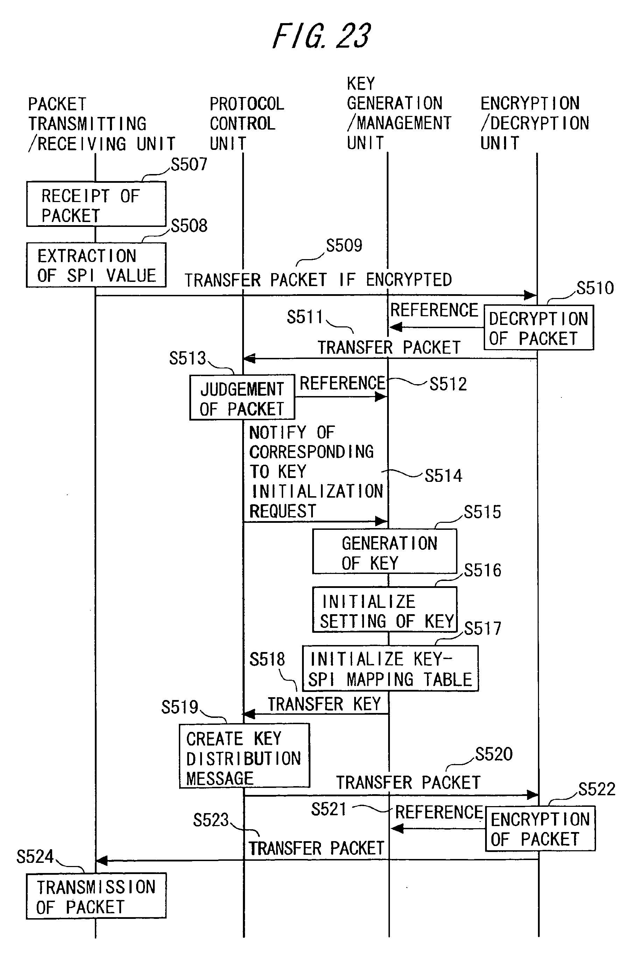

FIG. 23 a sequence diagram in which the attention is directed to the key transmitting device (HA).

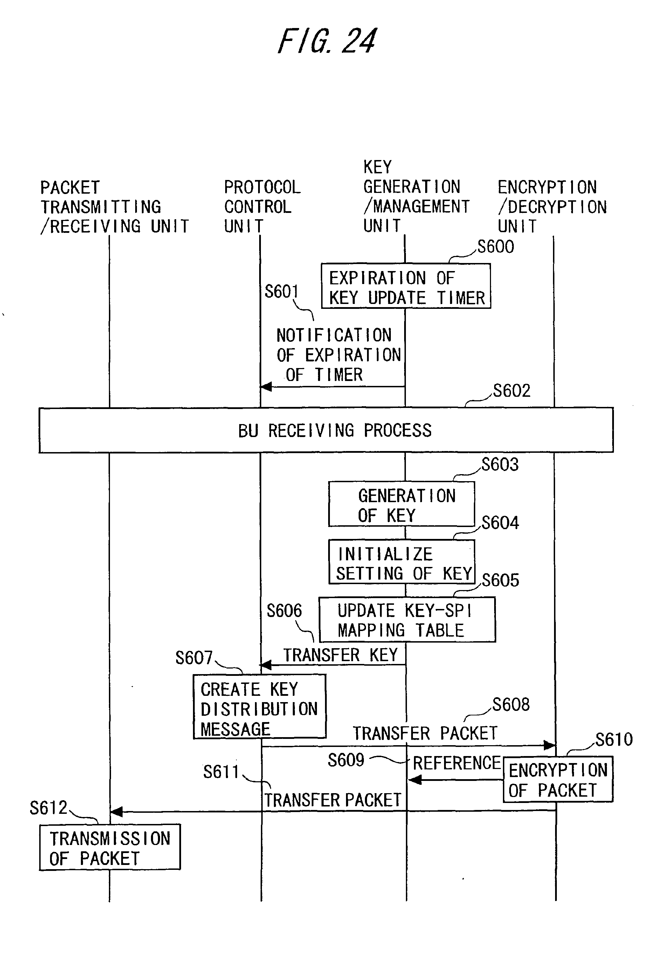

FIG. 24 a sequence diagram in which the attention is directed to the key transmitting device (HA).

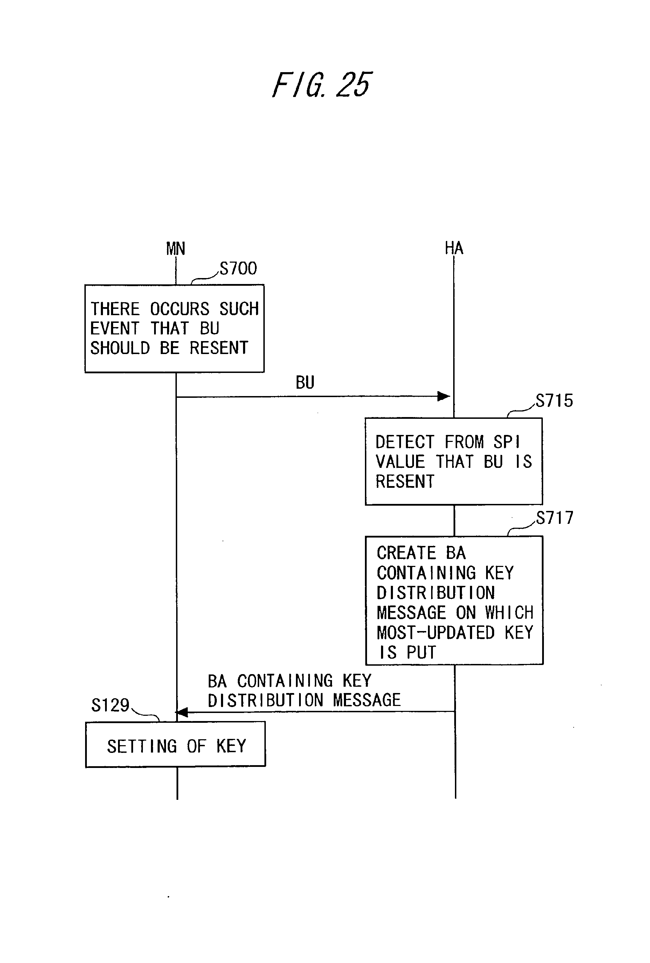

FIG. 25 a sequence diagram for explaining a procedure of distributing the dynamic key (common key) by a key resending request message from the key receiving device (MN).

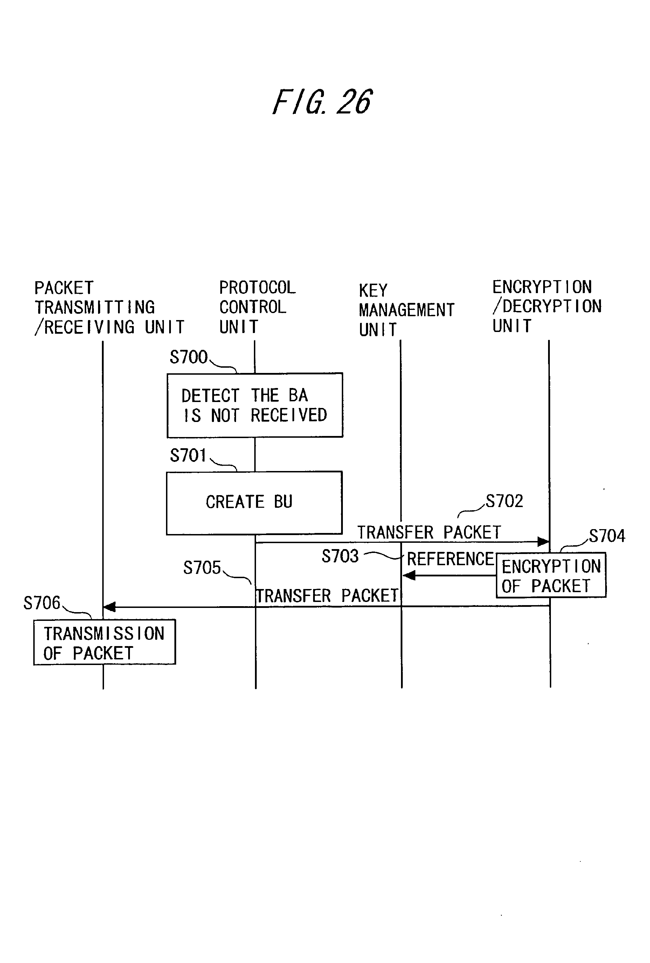

FIG. 26 a sequence diagram in which the attention is directed to the key receiving device (MN),

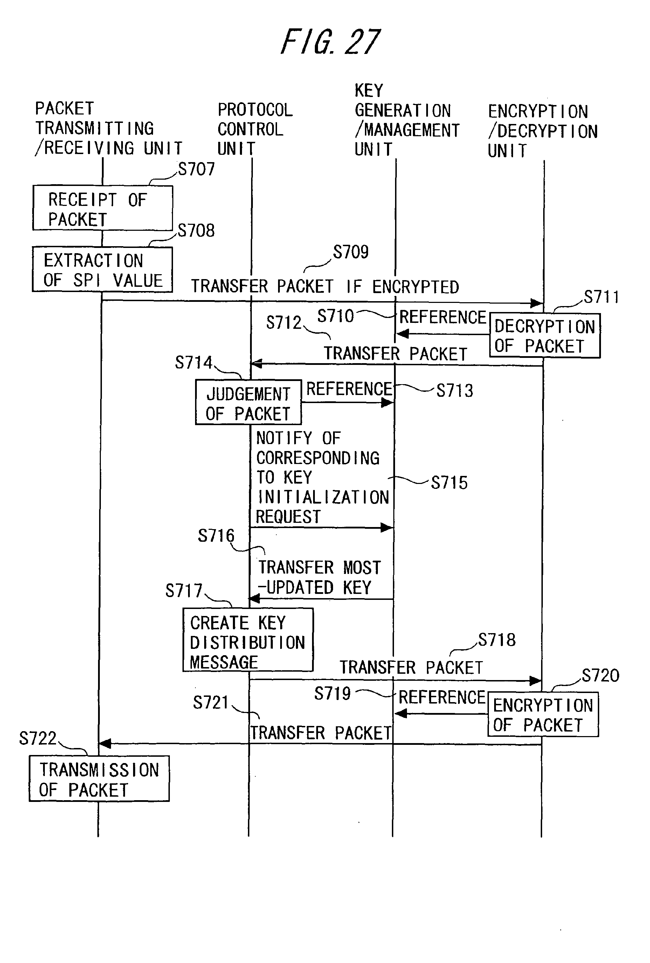

FIG. 27 a sequence diagram in which the attention is directed to the key transmitting device (HA).

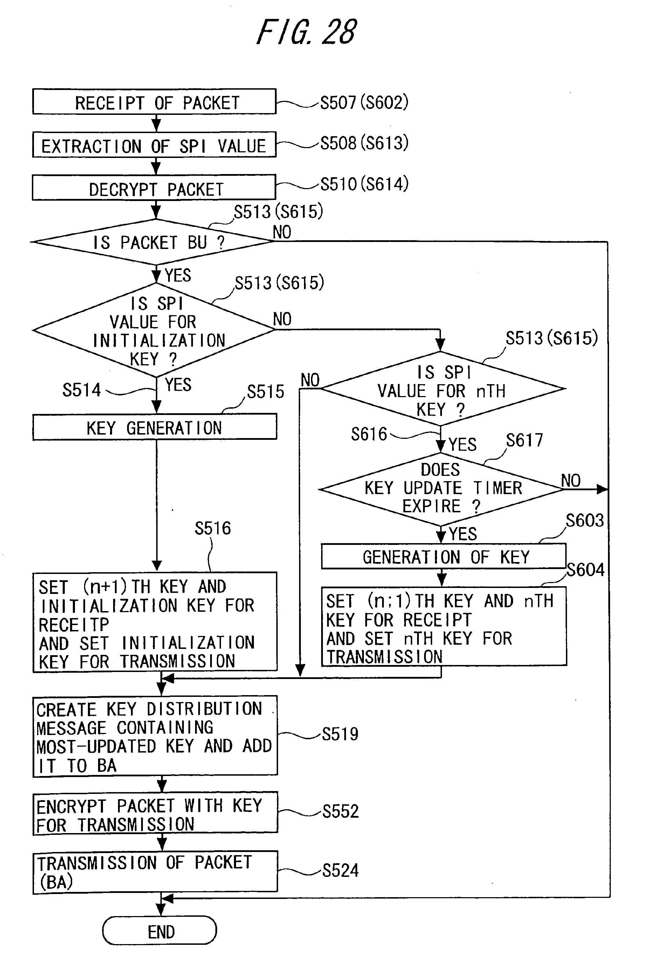

FIG. 28 a flowchart for explaining an outline of processes in the key transmitting device (HA).

### DETAILED DESCRIPTION OF THE INVENTION

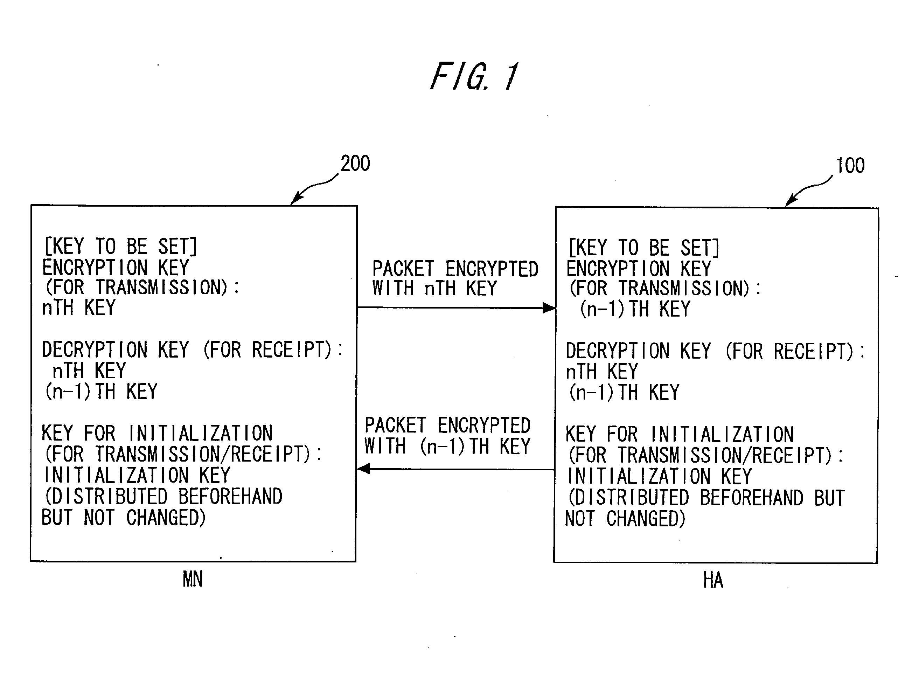

Hereinafter, a common key encryption communication system as an embodiment of the present invention will be explained referring to the drawings. FIG. 1 is a diagram for explaining an outline of architecture of the common key encryption communication system.

As shown in FIG. 1, the common key encryption communication system includes a key transmitting device and a key receiving device, wherein encryption communications by a common key updated at a predetermined timing are performed between the two devices. A key distribution is conducted by the key transmitting device. Therefore, in one (the key transmitting device)-to-many (the key receiving devices) common key encryption communications , a load required for key sharing is reduced.

Hitherto, each of the key transmitting device and the key receiving device managed only one receipt key, and therefore, during a period till a key receiving side receives a key distribution message containing a generated key and sets it after the key transmitting side has generated the key and has set it for itself, the encryption communications become impossible due to a key discordance. For solving it, in the common key encryption communication system in the present embodiment, the both sides hold and manage two generations of keys for receipt (an N-th key and an (N-1) th key) , the key (the (N-1) th key) one generation before is set (used) as an encryption key (for transmission) onthekeytransmittingside, andtheupdated key (the N-th key) is set (used) as an encryption key (for transmission) on the key receiving side. Further, the both sides set both of the updated key/one-generation-anterior key (the N-th key and the (N-1) th key) as decryption keys (for receipt) , whereby decryption can be effected on any side.

In the present embodiment, the communications based on Mobile IPv6 shall be performed between the key transmitting device and the key receiving device.

To begin with, an outline of Mobile IPv6 will be explained. Mobile IPv6 provides amechanism for continuing the communications using the same IP address even when a MN (mobile node) as a mobile terminal moves to a network segment different from an initial network segment (which is called a home network). Therefore, a HA (home agent) such as a router, etc. is provided in the initial network segment.

The MN, upon detecting that the MN has moved to the network segment different from the initial network segment, generates an address (a temporary address which is also calledacare-ofaddress) on the mobile destination network, and registers it in the HA. Concretely, the MN transmits a registration request (BU (Binding Update) to the HA. The HA is thereby notified of a new care-of address (contained as a source address).

The HA, upon receiving the registration request (BU) from the MN, registers the care-of address. Together with this, the HA transmits a registration reply (BA: binding acknowledgement) to theMN as a registration request sender. Hereafter, the HA, in the case of receiving a packet addressed to the registered MN, encapsulates this packet (wherein the care-of address is a destination address) and forwards it to the mobile destination network segment through tunneling. This enables the communications to continue by the same IP address even when the MN moves to the network segment different from the initial network segment.

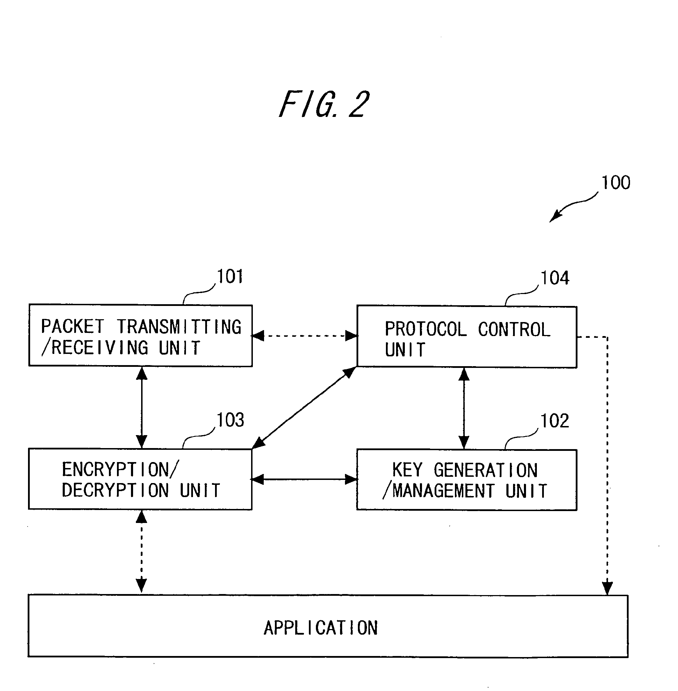

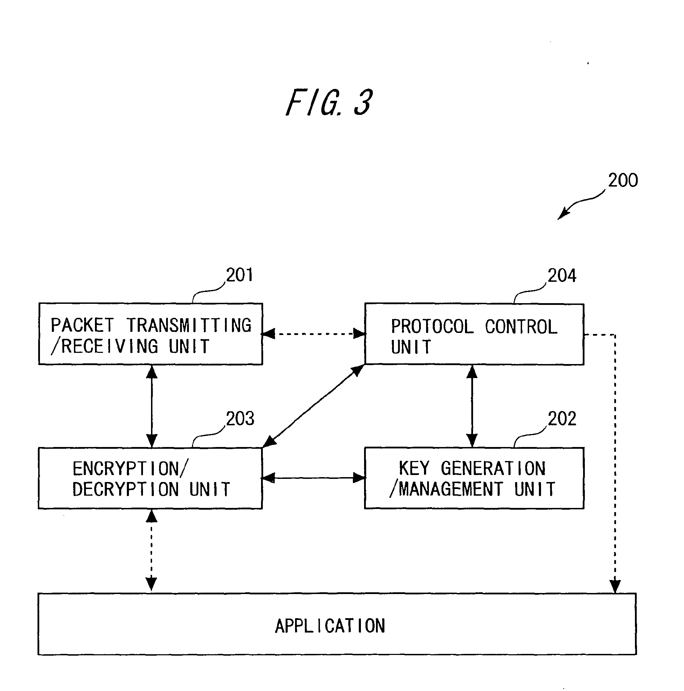

Next, architectures of the key transmitting device and of the key receiving device will be explained referring to the drawings. In the present embodiment, the above HA (home agent) corresponds to a key transmitting device 100, andtheMN (mobile node) corresponds to a key receiving device 200, respectively. FIG. 2 is a diagram for explaining an example of architecture of the key transmitting device (HA). FIG. 3 is a diagram for explaining an example of architecture of the key receiving device (MN).

As shown in FIG. 2, the key transmitting side device (HA) 100 includes a packet transmitting/receiving unit 101, a key generation/management unit 102, an encryption/decryption unit 103, and, a protocol control unit 104, etc.. Further, in the case of updating/initializing the key by use of an SPI value, the key generation/management unit retains an SPI-key mapping table (see FIG. 21).

The packet transmitting/receiving unit 101 is connected to a network of Mobile IPv6, receives a self-addressed packet (for instance, a packet containing a predetermined message)from the key receiving device (MN)200, etc. and sends a packet addressed to the key receiving device (MN) 200 to the network. This packet transmitting/receiving unit 101 can receive the predetermined message (such as a key initialization request message, a key update request message, or, a key resending request message, etc.) from the key receiving device (MN) 200, and hence, a request being given from the key receiving device (MN) 200, the key can be forcibly updated. Moreover, the updated key can be transmitted to the key receiving device (MN) 200.

The key generation/management unit 102 generates (or requests an external key generation unit to generate the encryption key and obtains this, or reads the encryption key from a key database, etc.) the encryption key. The key generation/management unit 102 retains and manages the encryption key thus generated, etc. (the most-updated encryption key), the encryption key generated, etc. at a timing just anterior thereto (the one-generation-anterior encryption key) , and, a preset key for initialization.

These keys are updated as will be described later on, however, in this case also, the key generation/management unit 102 retains and manages the updated (generated, etc.) encryption key (the most-updated encryption key) , the encryption key updated (generated, etc.) at a timing just anterior thereto (the one-generation-anterior encryption key), and, a preset (or pre-distributed) key for initialization. This key generation/management unit 102, in case the request is given with a fixed period or from the key receiving device (MN) 200, enables the key to be dynamically generated and updated.

Further, this key generation/management unit 102 manages two generations of keys for receipt, whereby the packet, even when encrypted by the key receiving device (MN) 200 with any one of the one-generation-anterior key and the most-updated key, can be decrypted. Moreover, this key generation/management unit 102 manages and sets one key for transmission, whereby the key transmitting device (HA) 100 can encrypt a packet with the one-generation-anterior key and can transmit it.

Further, this key generation/management unit 102 manages and sets one key for initialization, whereby the encrypted dynamic key initialization request message can be decrypted with this key. Further, the key transmitting device (HA) 100 recognizes that it has been encrypted with this key, thereby enabling the initialization of the dynamic key.

The key generated with the Nth key is hereinafter called the Nth key. Namely, the key transmitted to the key receiving device (MN) 200 from the key transmitting device (HA) 100 by the first key distribution, is a first key. The key generation/management unit 102 retains and manages two generations of keys and the initialization key for every key receiving device (MN) 200 (in case there are a plurality of MNs). The key generation/management unit 102 normally sets the one-generation-anterior encryption key for transmission and the most-updated encryption key and the one-generation-anterior encryption key for receipt, respectively.

The encryption/decryption unit 103, in case the received packet from the key receiving device (MN) 200 is encrypted, serves to decrypt this received packet with (any one of ) the encryption keys for receipt, and to encrypt a transmitted packet to the key receiving device (MN) 200 with the encryption key for transmission. The encryption/decryption unit 103, on the occasion of decryption or encryption, refers to the key generation/key management unit 102 and uses a proper encryption key.

The protocol control unit 104 serves to judge a content of the received packet from the key receiving device (MN) 200 that has been decrypted by the encryption/decryption unit 103, and to create the key distributionmessage to be transmitted to the key receiving device (MN) 200.

As shown in FIG. 3, the key receiving device (MN) 200 includes a packet transmitting/receiving unit 201, a key management unit 202, an encryption/decryption unit 203, a protocol control unit 204, etc..

The packet transmitting/receiving unit 201 is connected to a network of Mobile IPv6, receives a self-addressed packet from the key transmitting device (HA) 100, etc. and sends a packet addressed to the key transmitting device (HA) 100 to the network. This packet transmitting/receiving unit 201 receives the key distribution message, whereby the key distribution from the key transmitting device (HA) 100 becomes possible.

The key management unit 202 retains and manages the encryption keys (the most-updated key and the one-generation-anterior encryption key) contained in the key distribution message distributed from the key transmitting device (HA) 100, and, the preset key for initialization (any key is common to the key transmitting device (HA) 100).

The key management unit 202 normally sets the most-updated encryption key for transmission, and the most-updated encryption key and the one-generation-anterior encryption key for receipt, respectively. These keys are updated as will be described later on, however, in this case also, the key management unit 202 retains andmanages the updated (generated, etc.) encryption key (the most-updated encryption key), the encryption key updated (generated, etc.) at a timing just anterior thereto (the one-generation-anterior encryption key), and, a preset (or pre-distributed) key for initialization.

Further, this key management unit 202 manages two generations of keys for receipt, whereby the packet, even when encrypted by the key transmitting device (HA) 100 with either the most-updated key or the one-generation-anterior key, can be decrypted. Moreover, this key management unit 202 manages/sets one key for transmission, whereby the key receiving device (MN) 200 can encrypt a packet with the most-updated key and can transmit it.

Further, this key management unit 202 manages/sets one key for initialization, whereby the dynamic key initialization request message can be also encrypted, and the key transmitting side device recognizes that it has been encrypted with this key, thereby enabling the initialization.

The encryption/decryption unit 203, in case the received packet from the key transmitting device (HA) 100 is encrypted, serves to decrypt this received packet with (any one of) the encryption keys for receipt, and to encrypt a transmitted packet to the key transmitting device (HA) 100 with the encryption key for transmission. The encryption/decryption unit 203, on the occasion of decryption or encryption, refers to the key management unit 202 and uses a proper encryption key.

The protocol control unit 204 serves to create the predetermined message (the key initialization message, the key update message, the key resending request message, etc..) from the key transmitting device (HA) 100 that has been decrypted by the encryption/decryption unit 203. This protocol control unit 204 generates the key update request message or a message corresponding thereto, whereby the key receiving device (MN) 200 can, if an intention or a key distribution message of the key receiving side device (MN) 200 is discarded, make a request for the most-updated key. Further, the protocol control unit 204 generates the key initialization request message or a message corresponding thereto, whereby in case the initialization of both keys is needed due to a fault, etc. of the key receiving device (MN) 200, it is possible to request the key transmitting side device for this.

Next, operations of the encryption communications in the common key encryption communication system having the aforementioned architecture, will be explained referring to the drawings.

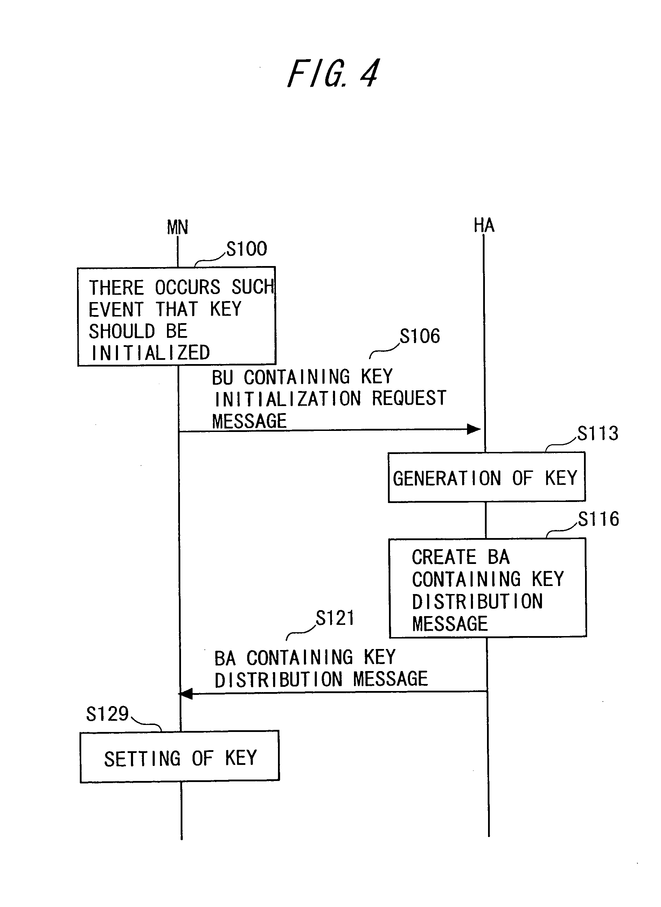

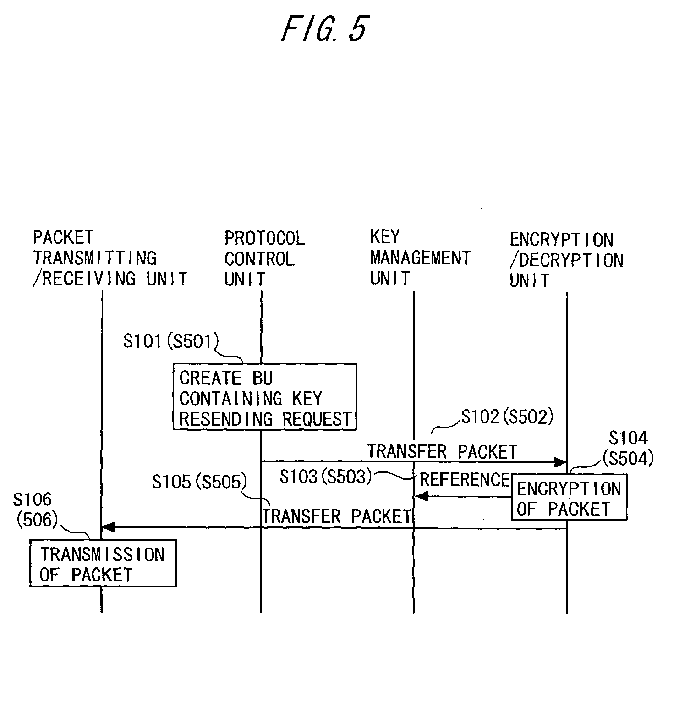

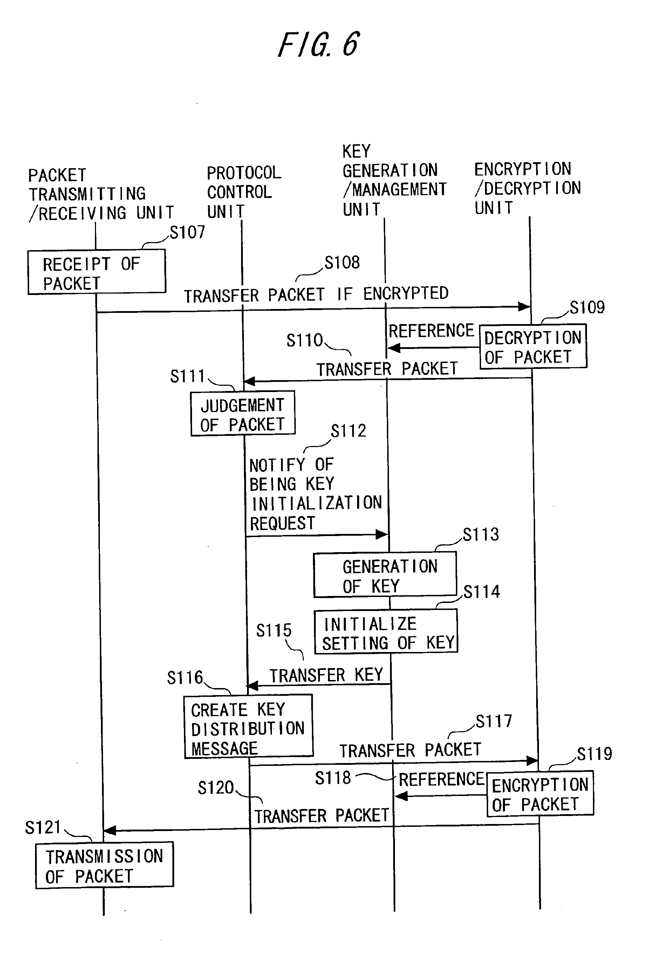

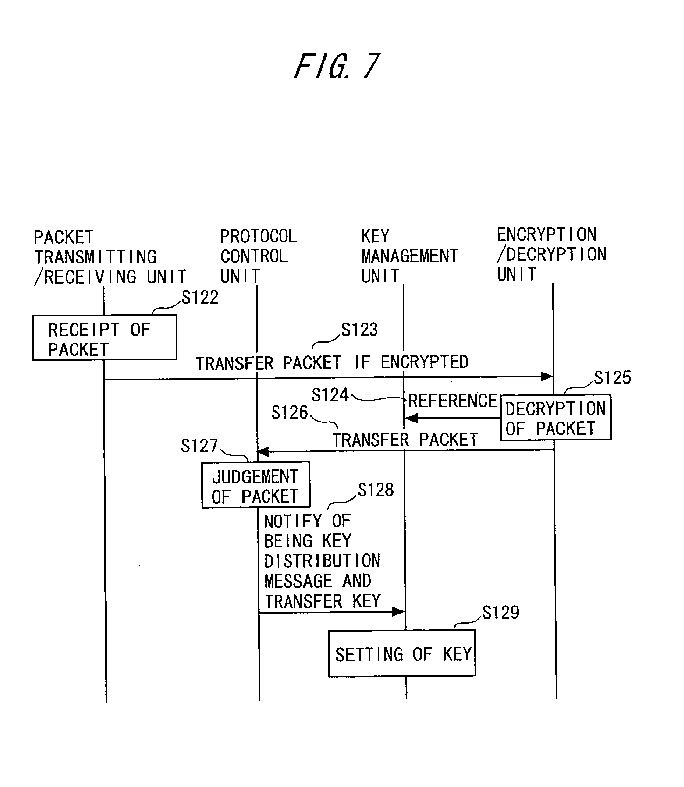

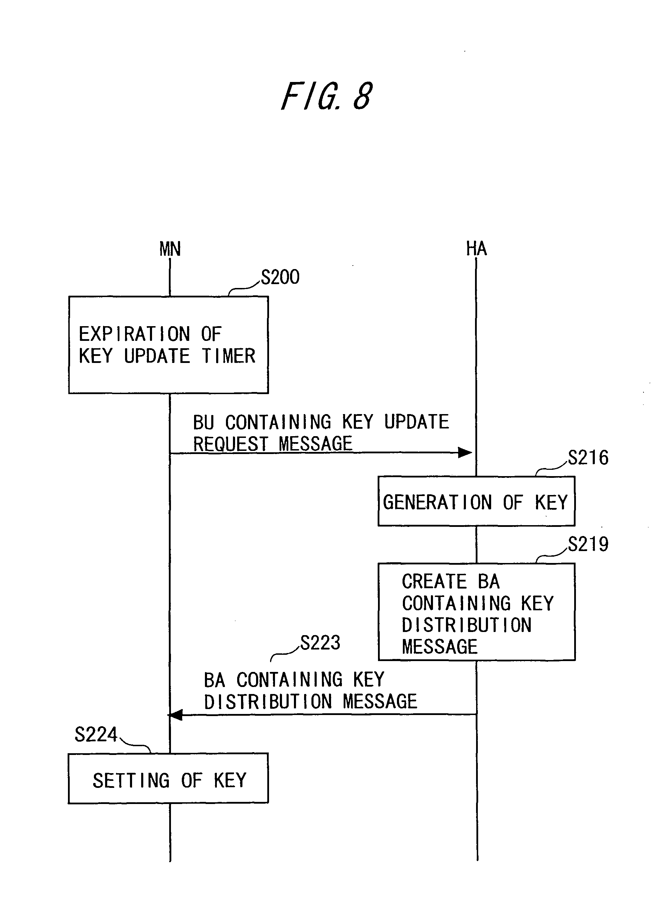

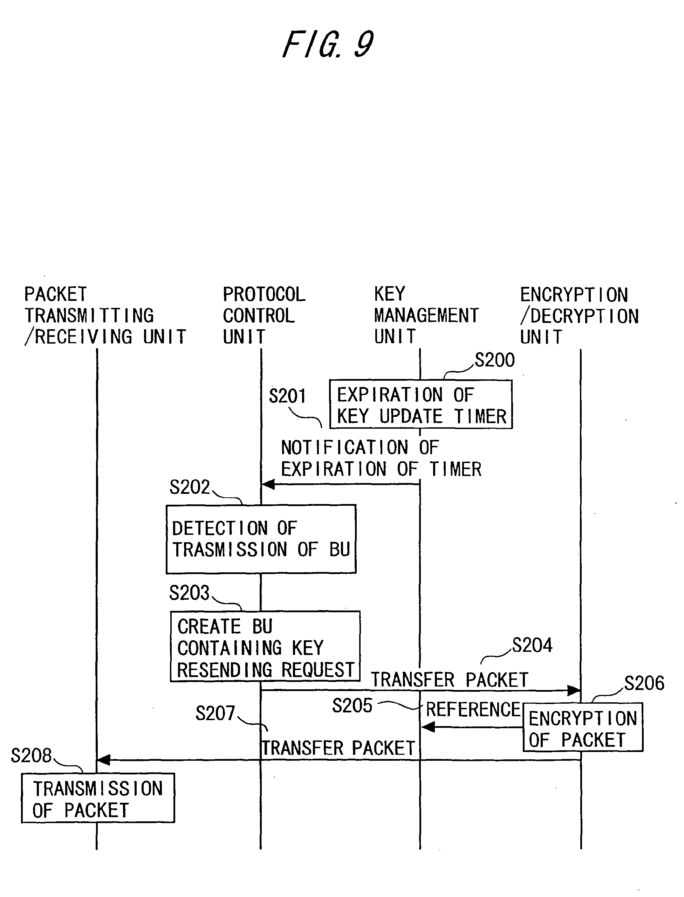

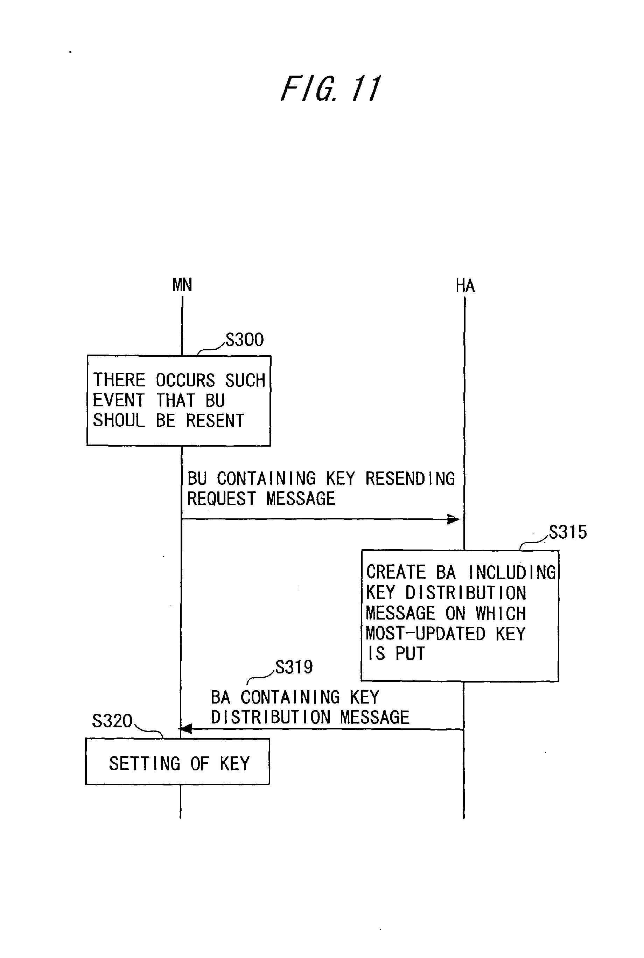

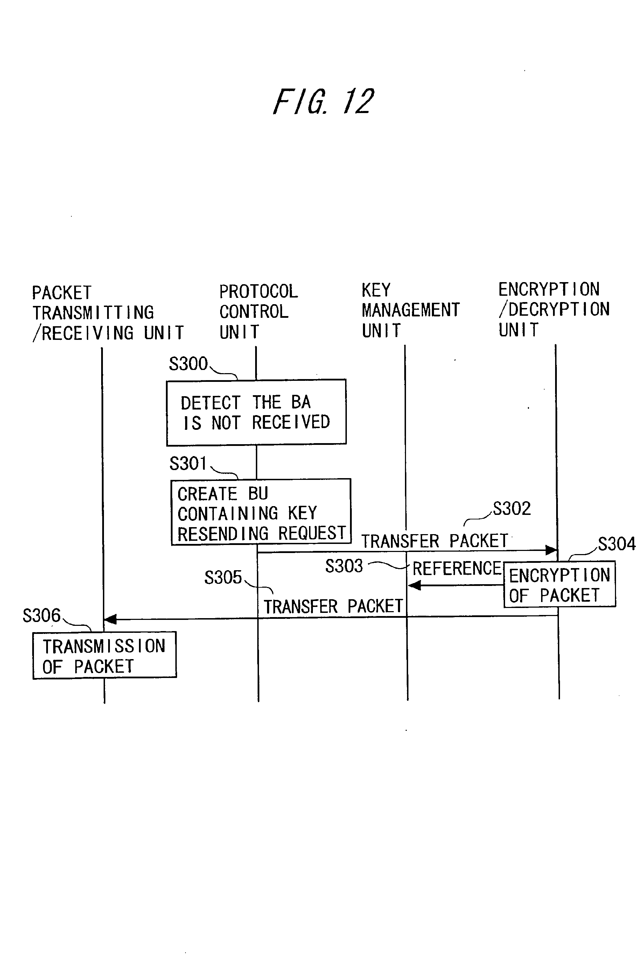

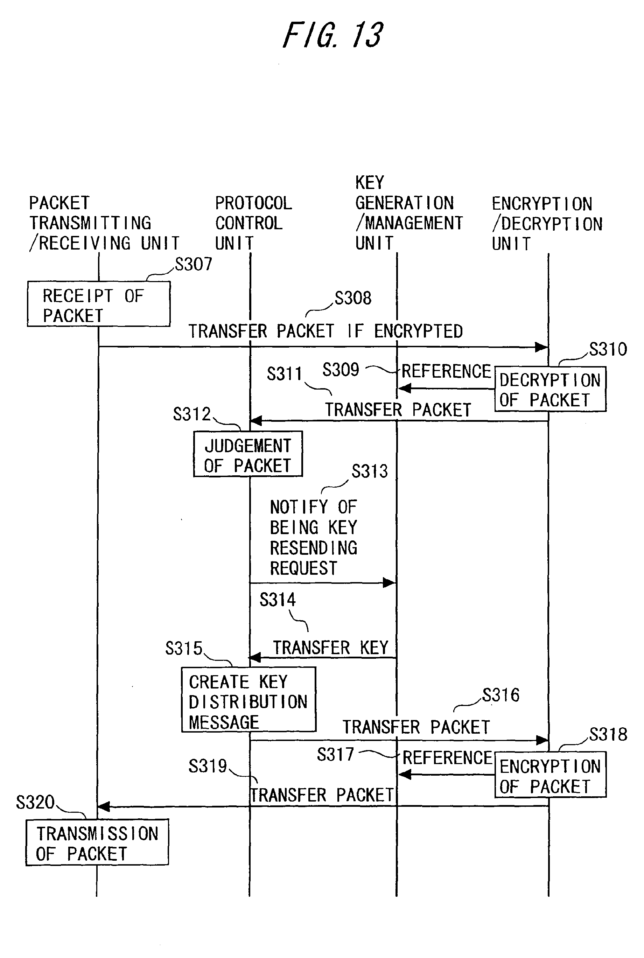

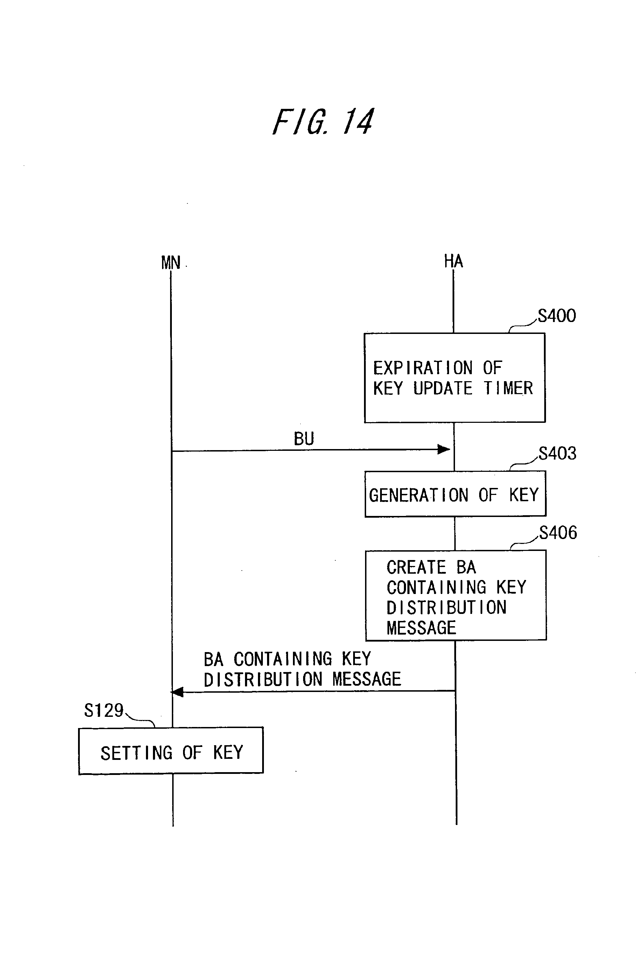

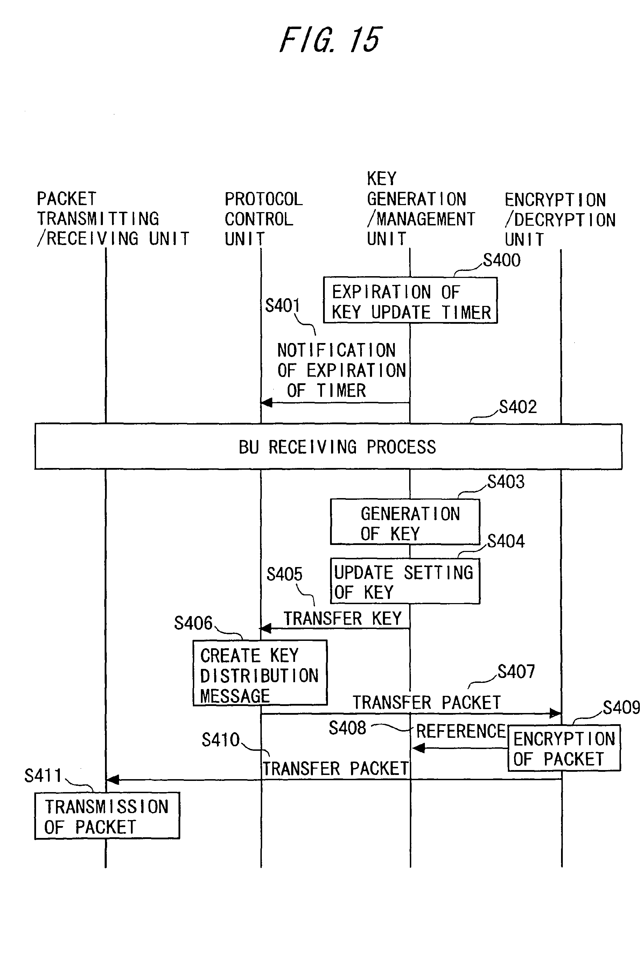

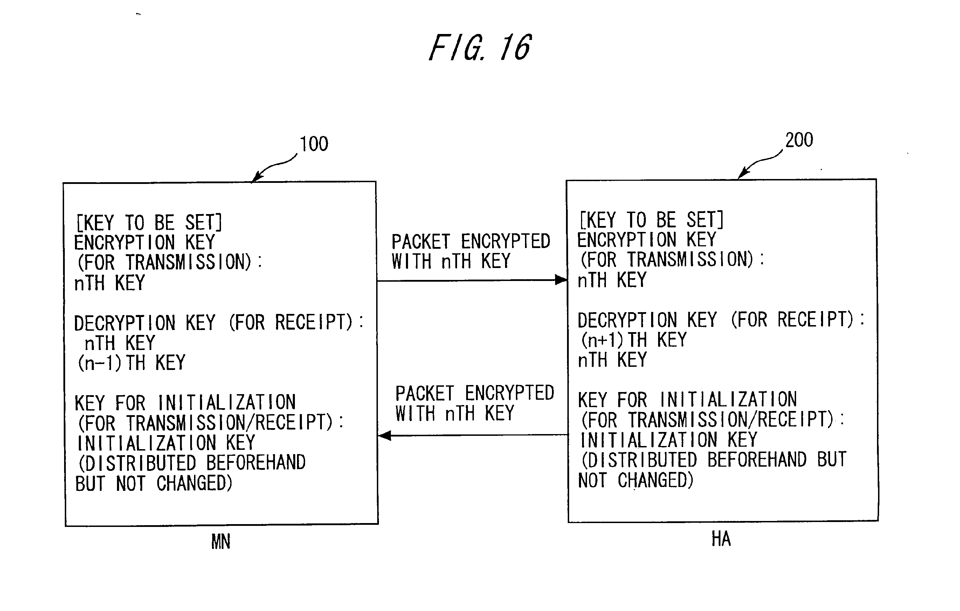

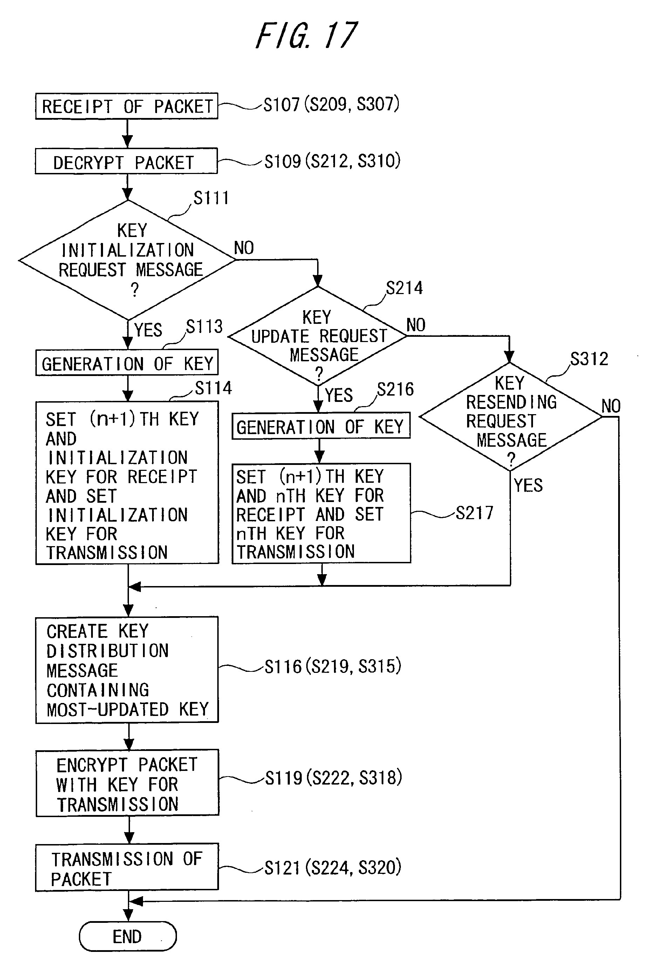

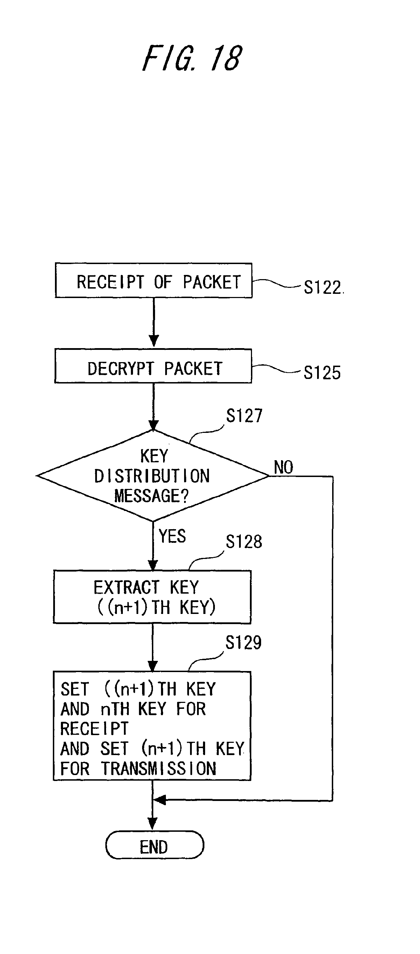

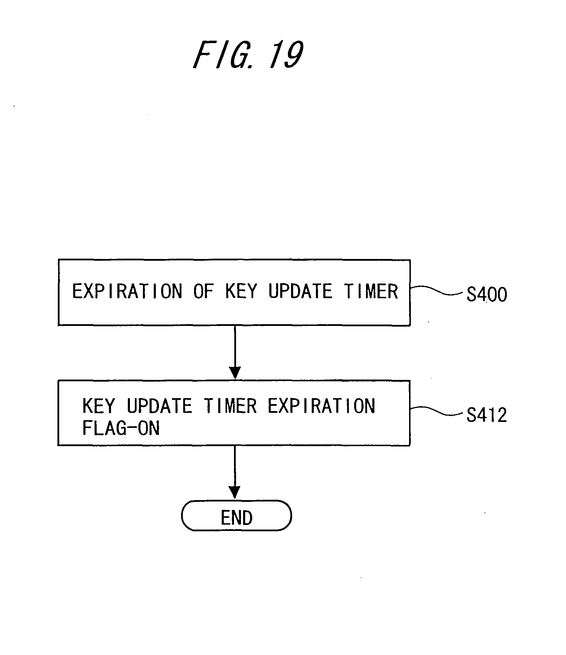

To start with, there will be explained such a process the key transmitting device (HA) 100 updates the encryption key and distributes it to the key receiving device (MN) 200 by the predetermined message from the key receiving device (MN) 200. Herein, it is assumed that the predetermined message be transmitted together with the registration request (BU) form the key receiving device (MN) 200 and that the key distribution message be transmitted together with the registration reply (BA) from the key transmitting device (HA).
(1) Example (part 1) of the operation in a case where the predetermined message from the key receiving device (MN) 200 is the key initialization message
   FIG. 4 is a sequence diagram for explaining a procedure of distributing a dynamic key (common key) when starting up the key receiving device (MN). FIGS. 5 and 7 are sequence diagrams in which an attention is directed to the key receiving device (MN). FIG. 6 is a sequence diagram in which the attention is directed to the key transmitting device (HA). FIG. 17 is a flowchart for explaining an outline of processes in the key transmitting device (HA). FIG. 18 is a flowchart for explaining an outline of processes in the key receiving device (MN).
   Herein, it is assumed that the dynamic keys (the Nth key, the (N-1) th key) be retained (set) in neither the key receiving device (MN) 200 nor the key transmitting device (HA) 100 when starting up the key receiving device (MN) 200, but only the initialization key be retained (set) in both of them.
   The key receiving device (MN) 200, upon a start-up, performs initial setting. Herein, the initialization keys are set as both of the encryption key (for transmission) and the decryption key (for receipt). Next, as shown in FIGS. 4 and 5, the receiving device (MN) 200, assuming that there occurs such an event that the key should be initialized (S100), creates the BU containing the key initialization request message. In the present embodiment, Mobile IPv6 is used, and hence, for example, the protocol control unit 204 creates an IP packet in which the key initialization request message and the BU are set (or placed) in an extension header field (or a payload field) (S101).
   This BU (IP packet) is, as will be described later on, encrypted by the encryption/decryption unit 203, and therefore the protocol control unit 204 applies an AH (authentication header) or an ESP (encapsulating security payload) to this BU (IP packet) so that the receiving side (HA) can recognize the key used for the encryption (i.e. , so that the decryption can be done on the receiving side). Note that there is a necessity of separately encrypting the key to be distributed in a way of being contained in the BA (the key used for the AH can be also diverted) in the case of applying only the AH.
   The AH or the ESP contains a field for SPI (security parameters index), and hence the protocol control unit 204 sets, in this field, data for designating the key used for the encryption thereof. Herein, as will hereinafter be described, the BU (IP packet) is encrypted with the key (the initialization key) for transmission, so that data for designating the initialization key is set as the data for designating the key used for the encryption thereof. The protocol control unit 204 transfers the created BU (IP packet) to the encryption/decryption unit 203 (S102).
   The encryption/decryption unit 203 encrypts the BU (IP packet) from the protocol control unit 204 (S104) by referring to the key management unit 202 (by use of the key (initialization key) for transmission) (S103). The encryption by the encryption/decryption unit 203 is conducted as follows. For instance, in a case where the key initialization request message and the BU are placed in the extension header of the IP packet of IPv6, the encryption/decryption unit 203 encrypts both of an IP header and a data field, and adds a new IP header thereto (tunnel mode). On the other hand, in a case where the key initialization request message and the BU are placed in the payload of the IP packet, the encryption/decryption unit 203 encrypts the data field excluding the IP header (transport mode). Alternatively, both of the IP header and the data field are encrypted, and a new IP header is added thereto. The encryption/decryption unit 203 transfers the encrypted BU (IP packet) to the packet transmitting/receiving unit 201 (S105).
   The packet transmitting/receiving unit 201 transmits the BU (IP packet) from the encryption/decryption unit 203 to the key transmitting device (HA) 100 (S106).
   As shown in FIGS. 6 and 17, the key transmitting device (HA) 100 receives the BU (IP packet containing the key initialization request message) from the key receiving device (MN) 200 (S107). The packet transmitting/receiving unit 101, if this received packet has been encrypted, transfers it to the encryption/decryption unit 103 (S108). The encryption/decryption unit 103 refers to the SPI value of the received packet and the generation/management unit 102, decrypts the packet with the key (which is herein the initialization key) designated by this SPI value (S109) and, after the process of the registration request (BU), transfers it to the protocol control unit 104 (S110).
   The protocol control unit 104 judges a content of the packet from the encryption/decryption unit 103 (S111) and, if it is the key initialization request message, notifies the key generation/management unit 102 of this (S112).
   The key generation/management unit 102 generates a new key (S113) (or the new key is obtained by some unit. For instance, an external key generation unit is requested to generate the key, and a message containing this key is obtained, or, the key is read from a self-possessed or externally-possessed key database, etc.). The key generation management unit 102 initializes the key setting (S114).
   Concretely, the initialization key is set as the encryption key (for transmission), and the new key and the initialization key are set as the decryption keys (for receipt), respectively (see FIG. 1). Then, the key generation/management unit 102, after setting these keys, transfers the generated new key to the protocol control unit 104 (S115). Herein, if the initialization key is set as the one-generation-anterior key, the same processes as of the dynamic key distribution of the second time onward become possible.
   The protocol control unit 104 creates the registration reply (BA) containing the key distribution message (S116). In the present embodiment, Mobile TPv6 is used, and hence, for example, the protocol control unit 104 creates the BA (IP packet) in which the key distribution message (containing the new key) and the BA are set (or placed) in an extension header field (or a payload field).
   This BA (IP packet) is, as will be described later on, encrypted by the encryption/decryption unit 103, and therefore the protocol control unit 104 applies the AH (authentication header) or the ESP (encapsulating security payload) to this BA (IP packet) so that the receiving side can recognize the key used for the encryption (i.e., so that the decryption can be done on the receiving side). Note that there is a necessity of separately encrypting the key to be distributed in a way of being contained in the BA (the key used for the AH can be also diverted) in the case of applying only the AH.
   The AH or the ESP contains a field for SPI (security parameters index) , and hence data for designating the key used for the encryption thereof is set in this field. Herein, as will hereinafter be described, the BA (IP packet) is encrypted with the key (the initialization key) for transmission, so that data for designating the initialization key is set as the data for designating the key used for the encryption thereof. The protocol control unit 104 transfers the created BA (IP packet) to the encryption/decryption unit 103 (S117). The encryption/decryption unit 103 encrypts the BA (IP packet) (S119) by referring to the key generation/management unit 102 (by use of the key (initialization key) for transmission) (S118). The encryption by the encryption/decryption unitis conducted as follows. For instance, in a case where the key distribution message and the BA are placed in the extension header of the IP packet of IPv6, the encryption/decryption unit encrypts both of an IP header and a data field, and adds a new IP header thereto (tunnel mode).
   On the other hand, in a case where the key distribution message and the BA are placed in the payload of the IP packet, the encryption/decryption unit encrypts the data field excluding the IP header (transport mode).
   Alternatively, both of the IP header and the data field are encrypted, and a new IP header is added thereto. The encryption/decryption unit transfers the encrypted BA (IP packet) to the packet transmitting/receiving unit 101 (S120).
   The packet transmitting/receiving unit 101 transmits the BA (IP packet) from the encryption/decryption unit 103 to the key receiving device (MN) 200 (S121).
   As shown in FIGS. 7 and 18, the key receiving device (MN) 200 receives the BA (IP packet) from the key transmitting device (HA) 100 (S122). The packet transmitting/receiving unit 201, if this received packet has been encrypted, transfers it to the encryption/decryption unit 203 (S123). The encryption/decryption unit 203 refers to the SPI value of the received packet and the key management unit 202 (S124), decrypts the packet with the key (which is herein the initialization key) designatedby this SPI value (S125) and transfers it to the protocol control unit 204 (S126).
   The protocol control unit 204 judges a content of the packet from the encryption/decryption unit 203 (S127) , extracts, if it is the key distribution message, the key (the new key generated in the HA), and transfers the extracted key to the key management unit 202 (S128).
   The key management unit 202 sets the extracted new key afresh (in addition to the initialization key) as the decryption key (for receipt) (S129). Further, the key management unit sets the extracted new key afresh as the encryption key (for transmission) , and deletes the initialization key that has been set for transmission (the initialization key itself is not deleted). Herein, if the initialization key is set as the one-generation-anterior key, the same processes as of the dynamic key distribution of the second time onward become possible.
(2) Example (part 2) of the operation in a case where the predetermined message from the key receiving device (MN) 200 is the key initialization message
   FIG. 4 is the sequence diagram for explaining the procedure of distributing the dynamic key (common key) when starting up the key receiving device (MN). FIGS. 5 and 7 are the sequence diagrams in which the attention is directed to the key receiving device (MN). FIG. 6 is the sequence diagram in which the attention is directed to the key transmitting device (HA). FIG. 17 is the flowchart for explaining the outline of processes in the key transmitting device (HA). FIG. 18 is the flowchart for explaining the outline of processes in the key receiving device (MN).
   Herein, each of the key transmitting device (HA) 100 and the key receiving device (MN) 200 retains and manages the most-updated key (the Nth key) and the one-generation-anterior key (the (N-1) th key) (see FIG. 1). Then, the one-generation-anterior key (the (N-1) th key) is so set as to be usable as the encryption key (for transmission) of the key transmitting device (HA) 100, and the most-updated key (the Nth key) is so set as to be usable as the encryption key (for transmission) of the key receiving device (MN), respectively. Further, two pieces of the most-updated key (the Nth key) and the one-generation-anterior key (the (N-1) th key) are so set as to be usable as the decryption keys (for receipt) of both of the key transmitting device (HA) 100 and the key receiving device (MN) 200 (see FIG. 1).
   For the key initialization requested by the key receiving device (MN) 200, there is a restart of the key receiving device (MN) 200, and so on. As shown in FIGS. 4 and 5, the key receiving device (MN) 200, in case the key initialization is determined inside the key receiving device (MN) 200 (S100), creates the key initialization request message. In the present embodiment, Mobile IPv6 is used, and hence, for example, the protocol control unit 204 creates the IP packet in which the key initialization request message and the BU are set (or placed) in the extension header field (or the payload field) (S101).
   This BU (IP packet) is, as will be described later on, encrypted by the encryption/decryption unit 203, and therefore the protocol control unit 204 applies the AH (authentication header) or the ESP (encapsulating security payload) to this BU (IP packet) so that the receiving side (HA) can recognize the key used for the encryption (i.e., so that the decryption can be done on the receiving side). Note that there is the necessity of separately encrypting the key to be distributed in a way of being contained in the BA (the key used for the AH can be also diverted) in the case of applying only the AH.
   The AH or the ESP contains the field for the SPI (security parameters index), and hence the data for designating the key used for the encryption thereof is set in this field. Herein, as will hereinafter be described, the IP packet is encrypted with the key (the Nth key) for transmission, so that the data for designating the Nth key is set as the data for designating the key used for the encryption thereof. The protocol control unit 204 transfers the created BU (IP packet containing the key initialization request message) to the encryption/decryption unit 203 (S102).
   The encryption/decryption unit 203 encrypts the BU (IP packet) from the protocol control unit 204 (S104) by referring to the key management unit 202 (by use of the key (the Nth key) for transmission) (S103). A method of this encryption has already been mentioned. The encryption/decryption unit 203 transfers the encrypted BU (IP packet) to the packet transmitting/receiving unit 201 (S105).
   The packet transmitting/receiving unit 201 transmits the BU (IP packet) from the encryption/decryption unit 203 to the key transmitting device (HA) 100 (S106).
   As shown in FIGS. 6 and 17, the key transmitting device (HA) 100 receives the BU (IP packet containing the key initialization request message) from the key receiving device (MN) 200 (S107), generates the key and initializes the setting.
   Concretely, the packet transmitting/receiving unit 101, if this received packet has been encrypted, transfers it to the encryption/decryption unit 103 (S108). The encryption/decryption unit 103 refers to the SPI value of the received packet and the generation/management unit 102, decrypts the packet with the key (which is herein the Nth key) designatedby this SPI value (S109) and, after the process of the registration request (BU), transfers it to the protocol control unit 104 (S110).
   The protocol control unit 104 judges a content of the packet from the encryption/decryption unit 103 (S111) and, if it is the key initialization request message, notifies the key generation/management unit 102 of this (S112).
   The key generation/management unit 102 generates a new key (an (N+1) th key) (S113) (or the new key is obtained by some means. For instance, the external key generation unit is requested to generate the key, and a message containing this key is obtained, or, the key is read from the self-possessed or externally-possessed key database, etc.). The key generation/management unit 102 initializes the key setting (S114). Concretely, the key generation/management unit 102 newly sets the (N+1) th key and the initialization key as the decryption keys (for receipt), and deletes the (N-1) th key.
   Further,the key generation/management unit 102 sets afresh the initialization key as the encryption key (for transmission), and deletes the (N-1) th key. Note that the initialization key is dealt with as the (N-1) th key, and the initialization key is deleted when updating the key next time. Then, the key generation/management unit 102 , after updating the key setting, transfers the created new key (the (N+1) th key) to the protocol control unit 104 (S115).
   The protocol control unit 104 creates the registration reply (BA) containing the key distribution message (S116). In the present embodiment, Mobile IPv6 is used, and hence, for example, the protocol control unit 104 creates the BA (IP packet) in which the key distribution message (containing the new key) and the BA are set (or placed) in an extension header field (or a payload field).
   This BA (IP packet) is, as will be described later on, encrypted by the encryption/decryption unit 103, and therefore the protocol control unit 104 applies the AH (authentication header) or the ESP (encapsulating security payload) to this BA (IF packet) so that the receiving side can recognize the key used for the encryption (i.e., so that the decryption can be done on the receiving side). Note that there is a necessity of separately encrypting the key to be distributed in a way of being contained in the BA (the key used for the AH can be also diverted) in the case of applying only the AH. The AH or the ESP contains the field for SPI (security parameters index) , and hence the data for designating the key used for the encryption thereof is set in this field.
   Herein, as will hereinafter be described, the IP packet is encrypted with the key (the initialization key) for transmission, so that the data for designating the initialization key is set as the data for designating the key used for the encryption thereof. The protocol control unit 104 transfers the created BA (IP packet) to the encryption/decryption unit 103 (S117).
   The encryption/decryption unit 103 encrypts the BA (IP packet) (S119) by referring to the key generation/management unit 102 (by use of the key (the initialization key) for transmission) (S118). Themethod of this encryption has already been mentioned. The encryption/decryption unit 103 transfers the encrypted IP packet to the packet transmitting/receiving unit 101 (S120).
   The packet transmitting/receiving unit 101 transmits the IP packet from the encryption/decryption unit 103 to the key receiving device (MN) 200 (S121).
   As shown in FIGS. 7 and 18, the key receiving device (MN) 200 receives the BA (IP packet to which the key distribution message is added) from the key transmitting device (HA) 100 (S122). The packet transmitting/receiving unit 201, if the received packet has been encrypted, transfers it to the encryption/decryption unit 203 (S123). The encryption/decryption unit 203 refers to the SPI value of the received packet and the key management unit 202 (S124), decrypts the packet with the key (which is herein theinitializationkey) designated by this SPI value (S125) and transfers it to the protocol control unit 204 (S126).
   The protocol control unit 204 judges a content of the packet from the encryption/decryption unit 203 (S127), extracts, if it is the key distribution message, the key (the new (N+1) th key generated in the HA), and transfers the extracted key to the key management unit 202 (8128).
   The key management unit 202 sets the extracted new key afresh (in addition to the initialization key) as the decryption key (for receipt) (S129). Further, the key management unit 202 sets the extracted new key afresh as the encryption key (for transmission), and deletes the initialization key that has been set for transmission (the initialization key itself is not deleted).
(3) Example of the operation in a case where the predetermined message from the key receiving device (MN) 200 is the key update request message
   FIG. 8 is a sequence diagram for explaining a procedure of distributing the dynamic key (common key). FIGS. 9 and 7 are sequence diagrams in which the attention is directed to the key receiving device (MN). FIG. 10 is a sequence diagram in which the attention is directed to the key transmitting device (HA). FIG. 17 is the flowchart for explaining the outline of processes in the key transmitting device (HA). FIGS. 18 and 20 are flowcharts for explaining the outline of processes in the key receiving device (MN).
   Herein, each of the key transmitting device (HA) 100 and the key receiving device (MN) 200 retains and manages the most-updated key (the Nth key) and the one-generation-anterior key (the (N-1) th key) (see FIG. 1). Then, the one-generation-anterior key (the (N-1) th key) is so set as to be usable as the encryption key (for transmission) of the key transmitting device (HA) 100, and the most-updated key (the Nth key) is so set as to be usable as the encryption key (for transmission) of the key receiving device (MN) , respectively.
   Further, two pieces of the most-updated key (the Nth key) and the one-generation-anterior key (the (N-1) th key) are so set as to be usable as the decryption keys (for receipt) of both of the key transmitting device (HA) 100 and the key receiving device (MN) 200 (see FIG. 1). Further, it is assumed that the (N+1) th key be generated in the key transmitting device (HA) 100, and this key be distributed to the key receiving device (MN) 200 (see FIGS. 8 and 9).
   In this example, the key receiving device (MN) 200 judges the updating of the key, and hence it is assumed that a key update timer be built in the key management unit 201 of the key receiving device (MN) 200, and the key distribution message be transmitted together with the BA message of Mobile IPv6. This key update timer enables the key update request message to be transmitted based on a self key update policy.
   As shown in FIGS. 8, 9 and 20, the key receiving device (MN) 200, in case the key updating is determined inside the key receiving device (MN) 200 (S200) (which is herein a case where the key update timer expires in the key management unit 201), creates the key update request message. Upon the expiration of the key update timer in the key management unit 201, the protocol control unit 204 is notified of this (S201).
   From this, the protocol control unit 204 detects a BU transmission (S202). In the present embodiment, since Mobile IPv6 is used, for instance, the protocol control unit 204 creates an IP packet in which the key update request message and the BU are set (or placed) in an extension header field (or a payload field) (S203).
   This BU (IP packet) is, as will be described later on, encrypted by the encryption/decryption unit 203, and therefore the protocol control unit 204 applies the AH (authentication header) or the ESP (encapsulating security payload) to this BU (IP packet) so that the receiving side can recognize the key used for the encryption (i.e. , so that the decryption can be done on the receiving side). Note that there is a necessity of separately encrypting the key to be distributed in a way of being contained in the BA (the key used for the AH can be also diverted) in the case of applying only the AH.
   The AH or the ESP contains the field for SPI (security parameters index) , and hence the data for designating the key used for the encryption thereof is set in this field. Herein, as will hereinafter be described, the IP packet is encrypted with the key (the Nth key) for transmission, so that the data for designating the Nth key is set as the data for designating the key used for the encryption thereof. The protocol control unit 204 transfers the created BU (IP packet containing the key update request message) to the encryption/decryption unit 203 (5204).
   The encryption/decryption unit 203 encrypts the BU (IP packet) from the protocol control unit 204 (S206) by referring to the key management unit 202 (by use of the key (Nth key) for transmission) (S205). The method of this encryption has already been mentioned. The encryption/decryption unit 203 transfers the encrypted BU (IP packet) to the packet transmitting/receiving unit 201 (S207).
   The packet transmitting/receiving unit 201 transmits the BU (IP packet) from the encryption/decryption unit 203 to the key transmitting device (HA) 100 (S208).
   As shown in FIGS. 10 and 17, the key transmitting device (HA) 100 receives the BU (IP packet containing the key update request message) from the key receiving device (MN) 200 (S209), and generates and updates the key.
   Concretely, the packet transmitting/receiving unit 101, if this received packet has been encrypted, transfers it to the encryption/decryption unit 103 (S210). The encryption/decryption unit 103 refers to the SPI value of the received packet and the generation/management unit 102 (S211), decrypts the packet with the key (which is herein the Nth key) designated by this SPI value (S212) and, after the process of the registration request (BU), transfers it to the protocol control unit 104 (S213).
   The protocol control unit 104 judges a content of the packet from the encryption/decryption unit 103 (S214) and, if it is the key update request message, notifies the key generation/management unit 102 of this (S215).
   The key generation/management unit 102 generates a new key (an (N+1) th key) (S216) (or the new key is obtained by some means. For instance, the external key generation unit is requested to generate the key, and a message containing this key is obtained, or, the key is read from the self-possessed or externally-possessed key database, etc.). The key generation/management unit 102 sets the key (S217). Concretely, the (N+1) th key is set afresh as the decryption key (for receipt) , and the (N-1) th key is deleted. Further, the Nth key is set afresh as the encryption key (for transmission), and the (N 1) th key is deleted. Then, the key generation/management unit 102, after updating the key setting, transfers the created new key (the (N+1) th key) to the protocol control unit 104 (S218).
   The protocol control unit 104 creates the registration reply (BA) containing the key distribution message (S219). In the present embodiment, Mobile IPv6 is used, and hence, for example, the protocol control unit 104 creates the BA (IP packet) in which the key distribution message (containing the new key) and the BA are set (or placed) in an extension header field (or a payload field).
   This IP packet is, as will be described later on, encrypted by the encryption/decryption unit 103, and therefore the protocol control unit 104 applies the AH (authentication header) or the ESP (encapsulating security payload) to this BA (IP packet) so that the receiving side can recognize the key used for the encryption (i.e. , so that the decryption can be done on the receiving side). Note that there is a necessity of separately encrypting the key to be distributed in a way of being contained in the BA (the key used for the AH can be also diverted) in the case of applying only the AH. The AH or the ESP contains the field for SPI (security parameters index), and hence the data for designating the key used for the encryption thereof is set in this field.
   Herein, as will hereinafter be described, the IP packet is encrypted with the key (the (N-1)th key) for transmission, so that the data for designating the (N-1) th key is set as the data for designating the key used for the encryption thereof. The protocol control unit 104 transfers the created BA (IP packet) to the encryption/decryption unit 103 (S220).
   The encryption/decryption unit 103 encrypts the BA (IP packet) (5222) by referring to the key generation/management unit 102 (by use of the key (N-1) th key) for transmission) (5221). The method of this encryption has already been mentioned. The encryption/decryption unit 103 transfers the encrypted IP packet to the packet transmitting/receiving unit 101 (S223).
   The packet transmitting/receiving unit 101 transmits the IP packet (IP packet containing the key distribution message) from the encryption/decryption unit 103 to the key receiving device (MN) (S224).
   As shown in FIGS. 7 and 18, the key receiving device (MN) 200 receives the BA (IP packet to which the key distribution message is added) from the key transmitting device (HA) 100 (S122). The key receiving device (MN) 200 sets the key contained in this IP packet as an encryption key (for transmission)/decryption key (for receipt) (S129).
   Concretely, the packet transmitting/receiving unit 201, if the received packet has been encrypted, transfers it to the encryption/decryption unit 203 (S123). The encryption/decryption unit 203 refers to the SPI value of the received packet and the key management unit 202 (S124) , decrypts the packet with the key (which is herein the (N-1) th key) designated by this SPI value (S125) and transfers it to the protocol control unit 204 (S126).
   The protocol control unit 204 judges a content of the packet from the encryption/decryption unit 203 (S127), extracts, if it is the key distribution message, the key (the new (N+1) th key generated in the HA), and transfers the extracted key to the key management unit 202 (S128).
   The key management unit 202 sets the extracted new key afresh as the decryption key (for receipt) (S129). Further, the key management unit 202 sets the extracted new key afresh as the encryption key (for transmission) , and deletes the key that has been set for transmission.
(4) Example of operation of MN in a case where the key distribution message is discarded
   FIG. 11 is a sequence diagram for explaining a procedure of distributing the dynamic key (common key) by the key resending request message from the key receiving device (MN). FIGS. 12 and 7 are sequence diagrams in which the attention is directed to the key receiving device (MN). FIG. 13 is a sequence diagram in which the attention is directed to the key transmitting device (HA). FIG. 17 is the flowchart for explaining the outline of processes in the key transmitting device (HA). FIG. 18 is the flowchart for explaining the outline of processes in the key receiving device (MN).
   Herein, in the aforementioned example (3) of the operation in the case where the predetermined message from the key receiving device (MN) 200 is the key update request message, it is assumed that the BA (IP packet) including the key distribution message (containing the (N+1) th key) from the key transmitting device (HA) 100 be discarded midway without arriving at the key receiving device (MN) 200 (see FIGS. 11, 12 and 13). In this case, it comes to a state wherein the key to be dynamically updated by only the key transmitting side device (HA) 100, is updated (see FIG. 16).
   As shown in FIGS. 11 and 12, the key receiving device (MN) 200, upon sensing that the BA (IP packet) for the BU (IP packet) transmitted to the key transmitting device (HA) 100 is not received (for example, the BA is not received within a fixed period after transmitting the BU) (S300), creates the BU (IP packet containing the key resending request message) for resending in the same way as the aforementioned key update request message, etc. with the protocol control unit 204 (S301), and transfers this to the encryption/decryption unit 203 (S302).
   The encryption/decryption unit 203 encrypts the BU (IP packet) from the protocol control unit 204 (S303) by referring to the key management unit 202 (by use of the key (Nth key) for transmission) (S304). The method of this encryption has already been mentioned. The encryption/decryption unit 203 transfers the encrypted BU (IP packet) to the packet transmitting/receiving unit 201 (S305).
   The packet transmitting/receiving unit 201 transmits the BU (IP packet)from the encryption/decryption unit 203 to the key transmitting device (HA) 100 (S306).
   As shown in FIGS. 13 and 17, the key transmitting device (HA) 100 receives the BU (IP packet containing the key resending request message) from the key receiving device (MN) 200 (S307), and resends the key.
   Concretely, the packet transmitting/receiving unit 101, if this received packet has been encrypted, transfers it to the encryption/decryption unit 103 (5308). The encryption/decryption unit 103 refers to the SPI value of the received packet and the generation/management unit 102 (S309), decrypts the packet with the key (which is herein the Nth key) designated by this SPI value (S310) and, after the process of the registration request (BU) , transfers it to the protocol control unit 104 (S311).
   The protocol control unit 104 judges a content of the packet from the encryption/decryption unit 103 (S312) and, if it is the key resending request message, notifies the key generation/management unit 102 of this (S313).
   The key generation/management unit 102 transfers the most-updated key (the (N+1) th key) distributed last time but discarded midway without generating a new key, to the protocol control unit 104 (S314).
   The protocol control unit 104 creates the key distribution message in the same way as the above (S315). The protocol control unit 104 transfers the created BA (IP packet) to the encryption/decryption unit 103 (S316).
   The encryption/decryption unit 103 encrypts the BA (IP packet) (S318) by referring to the key generation/management unit 102 (by use of the key (Nth key) for transmission) (S317). The method of this encryption has already been mentioned. The encryption/decryption unit 102 transfers the encrypted BA (IP packet) to the packet transmitting/receiving unit 101 (S319).
   The packet transmitting/receiving unit 101 transmits the BA (IP packet) from the encryption/decryption unit to the key receiving device (MN) 200 (S320).
   As shown in FIGS. 7 and 18, the key receiving device (MN) 200 receives the BA (IP packet to which the key distribution message is added) from the key transmitting device (HA) 100 (S122). The key receiving device (MN) 200 sets the key contained in the IP packet as the encryption key (for transmission) /decryption key (for receipt) in the same way as the above (S123 ~ S129).
   As described above, in the present example of the operation, the key transmitting side device (HA) 100 uses the one-generation-anterior dynamic key as the encryption key (for transmission) , whereby the communications become possible even if the dynamic key distribution message (which is also called the key distribution message) is discarded.
(5) Example of key initialization procedure at the time of a fault, etc. in key transmitting side device (HA)
   The following is a key initialization procedure at the time of a fault, etc. in the key transmitting device (HA) 100. Herein, in the above-mentioned example (3) of the operation in the case where the predetermined message from the key receiving device (MN) 200 is the key update request message, it is assumed that all the to-be-dynamically-updated keys (the Nth key and the (N-1) th key) of the key transmitting device (HA) be lost due to the fault, etc. in the key transmitting device (HA) 100, and that only the key for initialization be set.
   The key receiving device (MN) 100, upon detecting that the BA (IP packet) for the BU (IP packet containing the key update request message) transmitted to the key transmitting device (HA) 100 is not received either after the fixed period, as it is considered that there is the fault, etc. in the key transmitting device (HA) 100, resends the BU (IP packet containing the key update request message).
   The key receiving device (MN) 200, upon detecting that the BA for the resent BU (IP packet) is not received either after the fixed period, initializes the setting of the key to be dynamically updated, generates the BU containing the key initialization request message as shown in FIG. 5 (S101 ~ S105), and transmits it to the key transmitting device (HA) 100 (S106).
   The key transmitting device (HA) 100, as shown in FIGS. 6 and 17, upon detecting that the BU from the key receiving device (MN) contains the key initialization request (S107 ~ S111), in the same way as the above, executes the process when receiving the key initialization message (S113 ~ S115), adds the keydistributionmessage containing the most-updated key to the BA (S116), and transmits it to the key receiving device (MN) (S117 ~ S121).
   As shown in FIGS. 7 and 18, the key receiving device (MN), upon receiving the BA to which the key distribution message has been added (S122), sets the key contained therein as the encryption key (for transmission) /decryption key (for receipt) (S123 ~ S129). This is the same as what has already been stated.
   As described above, according to the present example of the operation, the key receiving device (MN) 200 resends the keyupdate requestmessage or themassage corresponding thereto, thereby enabling a return to the normal state (a state where the most-updated key is set for transmission and receipt of the key receiving device (MN) 200). Further, in case the key distribution message does not reach the key receiving device as a reply even by resending the key update request message, the key receiving device (MN) 200 performs initialization by transmitting the key initialization request message to the key transmitting device (HA) 100.
   As described above, in the present example of the operation, in case there occurs discordance between the dynamic keys of the key receiving side device and the key transmitting side device due to the fault, etc. in the key receiving side device, the key receiving side device transmits the dynamic key initialization message or the message corresponding thereto, thereby enabling both of the dynamic keys to be initialized.
(6) Example of the operation of HA in a case where the key transmitting side device (HA) judges the key updating
   FIG. 14 is a sequence diagram for explaining a procedure in which the key transmitting side device (HA) judges the key updating and distributes the dynamic key (common key). FIG. 7 is the sequence diagram in which the attention is directed to the key receiving device (MN) . FIG. 15 is a sequence diagram in which the attention is directed to the key transmitting device (HA). FIG. 18 is the flowchart for explaining the outline of processes in the key receiving device (MN). FIG. 19 is the flowchart for explaining the outline of processes in the key transmitting device (RA).
   Herein, it is assumed that a key update timer be built in the key generation/management unit 102 of the key transmitting device (HA) 100 in order for the key transmitting device (HA) 100 to judge the key updating (timing), and that the key distribution message be transmitted together with the BA message of Mobile IPv6. This key update timer enables the key to be updated with a fixed period. Further, it is assumed that the key transmitting device (HA) 100 retains the (N-1) th key and the Nth key, and that the (N+1)th key be generated in the key transmitting device (HA) 100 and be distributed to the key receiving device (MN) 200.
   As shown in FIGS. 14 and 15, when the key update timer of the key transmitting device (HA) 100 expires in the key generation/management unit 102 (S400), the protocol control unit 104 is notified of this (S401), and the protocol control unit 104 retains this for every key receiving device (MN) 200. For instance, the protocol control unit 104 sets ON a key update timer expiration flag for the key receiving device (MN) 200 concerned (S412).
   The key transmitting device (HA) 100, upon receiving the BU (this contains none of the predetermined messages) from the key receiving device (MN) 200, executes the BU processing (S402), and judges by referringto the protocol control unit 104 whether the key update timer of the key receiving device (MN) 200 as a BU sender expires or not. If the key update timer concerned expires (for example, if the key update timer expiration flag for the key receiving device (MN) 200 concerned is set ON), the protocol control unit 104, on the occasion of creating the BA, requests the key generation/management unit 102 to update the key.
   The key generation/management unit 102 generates the new key (the (N+1) th key) (S403) (or, the new key is obtained by some means. For instance, the external key generation unit is requested to generate the key, and this is obtained, or, the key is read from the self-possessed or externally-possessed key database, etc.). The key generation/management unit 102 updates the key setting (S404). Concretely, the (N+1) th key is set afresh as the decryption key (for receipt), and the (N-1) th key is deleted. Further, the Nth key is set afresh as the encryption key (for transmission), and the (N-1) th key is deleted. Then, the key generation/management unit 102, after updating the key setting, transfers the created new key (the (N+1)th key) to the protocol control unit 104 (S405).
   The protocol control unit 104 creates the registration reply (BA) containing the key distribution message (S406). In the present embodiment, Mobile IPv6 is used, and hence, for example, the protocol control unit 104 creates the BA (IP packet) in which the key distribution message (containing the new key) and the BA are set (or placed) in an extension header field (or a payload field) .
   This BA (IP packet) is, as will be described later on, encrypted by the encryption/decryption unit 103, and accordingly the protocol control unit 104 applies the AH (authentication header) or the ESP (encapsulating security payload) to this BA (IP packet) so that the receiving side can recognize the key used for the encryption (i.e., so that the decryption can be done on the receiving side). Note that there is a necessity of separately encrypting the key to be distributed in a way of being contained in the BA (the key used for the AH can be also diverted) in the case of applying only the AH.
   The AH or the ESP contains the field for SPI (security parameters index) , and hence the data for designating the key used for the encryption thereof is set in this field. Herein, as will hereinafter be described, the IP packet is encrypted with the key (the (N-1) th key) for transmission, so that the data for designating the (N-1) th key is set as the data for designating the key used for the encryption thereof. The protocol control unit 104 transfers the created BA (IP packet) to the encryption/decryption unit 103 (S407).
   The encryption/decryption unit 103 encrypts the BA (IP packet) (S409) by referring to the key generation/management unit 102 (by use of the key (N-1) th key) for transmission) (S408). The method of this encryption has already been mentioned. The encryption/decryption unit 103 transfers the encrypted IP packet to the packet transmitting/receiving unit 101 (S410).
   The packet transmitting/receiving unit 101 transmits the IP packet (IP packet containing the key distribution message) from the encryption/decryption unit 103 to the key receiving device (MN) (S411). Note that upon a completion of the transmission of the BA, the key update timer expiration flag for the key receiving device (MN) 200 concerned is set OFF.
   As shown in FIGS. 7 and 18, the key receiving device (MN) 200 receives the BA (IP packet to which the key distribution message is added) from the key transmitting device (HA) 100 (S122). The key receiving device (MN) 200 sets the key containedin this IP packet as an encryption key (for transmission)/decryption key (for receipt) (S129).
   Concretely, the packet transmitting/receiving unit 201, if the received packet has been encrypted, transfers it to the encryption/decryption unit 203 (S123). The encryption/decryption unit 203 refers to the SPI value of the received packet and the key management unit 202 (S124), decrypts the packet with the key (which is herein the (N-1) th key) designated by this SPI value (S125) and transfers it to the protocol control unit 204 (S126).
   The protocol control unit 204 judges a content of the packet from the encryption/decryption unit 203 (S127), extracts, if it is the key distribution message, the key (the new (N+1) th key generated in the HA) , and transfers the extracted key to the key management unit 202 (S128).
   The key management unit 202 sets the extracted new key afresh as the decryption key (for receipt) (S129). Further, the key management unit 202 sets the extracted new key afresh as the encryption key (for transmission), and deletes the key that has been set for transmission.
   Next, other embodiment will be explained.
   Herein, the encryption communications based on IPsec are performed, wherein the key initialization/key updating is judged from the SPI value without using the predetermined messages unlike the embodiment described above. The key transmitting device (HA) 100 retains a key-SPI mapping table (see FIG. 21) , and collates the SPI value contained in the BU (IP packet containing none of the predetermined messages) from the key receiving device (MN) 200 with that table, and thereby judges which key the received packet has been encrypted with. Other configurations are the same as those in the aforementioned embodiment, and their explanations are omitted accordingly.
(7) Example (part 1) of the operation in a case where the BU from the key receiving device (MN) 200 is encrypted with the initialization key
   FIG. 22 is a sequence diagram for explaining a procedure of distributing the dynamic key (common key) when starting up the key receiving device (MN). FIGS. 5 and 7 are sequence diagrams in which the attention is directed to the key receiving device (MN). FIG. 23 is a sequence diagram in which the attention is directed to the key transmitting device (HA). FIG. 28 is a flowchart for explaining an outline of processes in the key transmitting device (HA).
   Herein, it is assumed that the dynamic keys (the Nth key, the (N-1) th key) be retained (set) in neither the key receiving device (MN) 200 nor the key transmitting device (HA) 100 when starting up the key receiving device (MN) 200, but only the initialization key be retained (set) in both of them.
   The key receiving device (MN) 200, upon a start-up, performs initial setting. Herein, the initialization keys are set as both of the encryption key (for transmission) and the decryption key) for receipt). Next, as shown in FIGS. 22 and 5, the receiving device (MN) 200, assuming that there occurs such an event that the key should be initialized (S500), creates the BU. Herein, unlike the embodiment described above, the BU does not contain the key initialization request message. In the present embodiment, Mobile IPv6 is used, and hence, for example, the protocol control unit 204 creates the IP packet in which the BU is set (or placed) in the extension header field (or the payload field) (S501).
   This BU (IP packet) is, as will be described later on, encrypted by the encryption/decryption unit 203, and therefore the protocol control unit 204 applies the AH (authentication header) or the ESP (encapsulating security payload) to this BU (IP packet) so that the receiving side (HA) can recognize the key used for the encryption (i.e., so that the decryption can be done on the receiving side). Note that there is a necessity of separately encrypting the key to be distributed in a way of being contained in the BA (the key used for the AH can be also diverted) in the case of applying only the AH.
   The AH or the ESP contains a field for SPI (security parameters index) , and hence the protocol control unit 204 sets, in this field, data for designating the key used for the encryption thereof. Herein, as will hereinafter be described, the BU (IP packet) is encrypted with the key (the initialization key) for transmission, so that data for designating the initialization key is set as the data for designating the key used for the encryption thereof. The protocol control unit 204 transfers the created BU (IP packet) to the encryption/decryption unit 203 (S502).
   The encryption/decryption unit 203 encrypts the BU (IP packet) from the protocol control unit 204 (S504) by referring to the key management unit 202 (by use of the key (initialization key) for transmission) (S503). The encryption by the encryption/decryption unit 203 is conducted as follows.
   For instance, in a case where the key initialization request message and the BU are placed in the extension header of the IP packet of IPv6, the encryption/decryption unit 203 encrypts both of an IP header and a data field, and adds a new IP header thereto (tunnel mode). On the other hand, in a case where the key initialization request message and the BU are placed in the payload of the IP packet, the encryption/decryption unit 203 encrypts the data field excluding the IP header (transport mode).
   Alternatively, both of the IP header and the data field are encrypted, and a new IP header is added thereto. The encryption/decryption unit 203 transfers the encrypted BU (IP packet) to the packet transmitting/receiving unit 201 (S505).
   The packet transmitting/receiving unit 201 transmits the BU (IP packet) from the encryption/decryption unit 203 to the key transmitting device (HA) 100 (S506).
   As shown in FIGS. 23 and 28, the key transmitting device (HA) 100, when receiving the BU (IP packet containing the key initialization request message) from the key receiving device (MN) 200 (S507) , extracts an SPI value from this received packet (S508). Alternatively, the encryption/decryption unit may extract this SPI value. The packet transmitting/receiving unit 101, if this received packet has been encrypted, transfers it to the encryption/decryption unit 103 (S509).
   The encryption/decryption unit 103 refers to the SPI value of the received packet and the generation/management unit 102, decrypts the packet with the key (which is herein the initialization key) designated by this SPI value (S510) and, after the process of the registration request (BU) , transfers the decrypted packet and the SPI value to the protocol control unit 104 (S511).
   The protocol control unit 104 refers to the key generation/management unit 102 (S512) and collates the key-SPI value table with the extracted SPI value, thereby judging which key the packet from the encryption/decryption unit 103 is encrypted with (S513). Then, the protocol control unit 104, if judging this to be such an implication that it has been encrypted by use of the initialization key, notifies the key generation/management unit 102 of this (S514).
   The key generation/management unit 102 generates a new key (S515) (or the new key is obtained by some means. For instance, an external key generation unit is requested to generate the key, and a message containing this key is obtained, or, the key is read from a self-possessed or externally-possessed key database, etc.). The key generationmanagement unit 102 initializes the key setting and also initializes the key-SPI mapping table (S516, S517).
   Concretely, the initialization key is set as the encryption key (for transmission), and the new key and the initialization key are set as the decryption keys (for receipt), respectively (see FIG. 1). Then, the key generation/management unit 102, after setting these keys, transfers the generated new key to the protocol control unit 104 (S518). Herein, if the initialization key is set as the one-generation-anterior key, the same processes as of the dynamic key distribution of the second time onward become possible.
   The protocol control unit 104 creates the registration reply (BA) containing the key distribution message (S519). In the present embodiment, Mobile IPv6 is used, and hence, for example, the protocol control unit 104 creates the BA (IP packet) in which the key distribution message (containing the new key) and the BA are set (or placed) in an extension header field (or a payload field).
   This BA (IP packet) is, as will be described later on, encrypted by the encryption/decryption unit 103, and therefore the protocol control unit 104 applies the AH (authentication header) or the ESP (encapsulating security payload) to this BA (IP packet) so that the receiving side can recognize the key used for the encryption (i.e., so that the decryption can be done on the receiving side). Note that there is a necessity of separately encrypting the key to be distributed in a way of being contained in the BA (the key used for the AH can be also diverted) in the case of applying only the AH. The AH or the ESP contains a field for SPI (security parameters index) , and hence data for designating the key used for the encryption thereof is set in this field.
   Herein, as will hereinafter be described, the BA (IP packet) is encrypted with the key (the initialization key) for transmission, so that data for designating the initialization key is set as the data for designating the key used for the encryption thereof. The protocol control unit 104 transfers the created BA (IP packet) to the encryption/decryption unit 103 (S520).
   The encryption/decryption unit 103 encrypts the BA (IP packet) (S522) by referring to the key generation/management unit 102 (by use of the key (initialization key) for transmission) (S521). The encryption by the encryption/decryption unit is conducted as follows. For instance, in a case where the key distribution message and the BA are placed in the extension header of the IP packet of IPv6, the encryption/decryption unit encrypts both of an IP header and a data field, and adds a new IP header thereto (tunnel mode).
   On the other hand, in a case where the key distribution message and the BA are placed in the payload of the IP packet, the encryption/decryption unit encrypts the data field excluding the IP header (transport mode). Alternatively, both of the IP header and the data field are encrypted, and a new IP header is added thereto . The encryption/decryption unit transfers the encrypted BA (IP packet) to the packet transmitting/receiving unit 101 (S523).
   As shown in FIGS. 7 and 18, the key receiving device (MN) 200 receives the BA (IP packet) from the key transmitting device (HA) 100 (S122). The packet transmitting/receiving unit 201, if this received packet has been encrypted, transfers it to the encryption/decryption unit 203 (S123). The encryption/decryption unit 203 refers to the SPI value of the received packet and the key management unit 202 (S1 24), decrypts the packet with the key (which is herein the initialization key) designatedby this SPI value (S125) and transfers it to the protocol control unit 204 (S126)
   The protocol control unit 204 judges a content of the packet from the encryption/decryption unit 203 (S127), extracts, if it is the key distribution message, the key (the new key generated in the HA), and transfers the extracted key to the key management unit 202 (S128).
   The key management unit 202 sets the extracted new key afresh (in addition to the initialization key) as the decryption key (for receipt) (S129). Further, the key management unit sets the extracted new key afresh as the encryption key (for transmission), and deletes the initialization key that has been set for transmission (the initialization key itself is not deleted). Herein, if the initialization key is set as the one-generation-anterior key, the same processes as of the dynamic key distribution of the second time onward become possible.
(8) Example (part 2) of the operation in a case where the BU from the key receiving device (MN) 200 is encrypted with the key initialization key
   FIG. 22 is the sequence diagram for explaining the procedure of distributing the dynamic key (common key) when starting up the key receiving device (MN). FIGS. 5 and 7 are the sequence diagrams in which the attention is directed to the key receiving device (MN). FIG. 23 is the sequence diagram in which the attention is directed to the key transmitting device (HA). FIG. 28 is the flowchart for explaining the outline of processes in the key transmitting device (HA).
   Herein, each of the key transmitting device (HA) 100 and the key receiving device (MN) 200 retains and manages the most-updated key (the Nth key) and the one-generation-anterior key (the (N-1) th key) (see FIG. 1). Then, the one-generation-anterior key (the (N-1) th key) is so set as to be usable as the encryption key (for transmission) of the key transmitting device (HA) 100, and the most-updated key (the Nth key) is so set as to be usable as the encryption key (for transmission) of the key receiving device (MN), respectively. Further, two pieces of the most-updated key (the Nth key) and the one-generation-anterior key (the (N-1) th key) are so set as to be usable as the decryption keys (for receipt) of both of the key transmitting device (HA) 100 and the key receiving device (MN) 200 (see FIG. 1).
   For the key initialization requested by the key receiving device (MN) 200, there is a restart of the key receiving device (MN) 200, and so on. As shown in FIGS. 22 and 5, the key receiving device (MN) 200, in case the key initialization is determined inside the key receiving device (MN) 200 (S500), creates the BU. Herein, unlike the embodiment described above, the BU does not contain the key initialization request message. In the present embodiment, Mobile IPv6 is used, and hence, for example, the protocol control unit 204 creates the IP packet in which the BU is set (or placed) in the extension header field (or the payload field) (S501).
   This BU (IP packet) is, as will be described later on, encrypted by the encryption/decryption unit 203, and therefore the protocol control unit 204 applies the AH (authentication header) or the ESP (encapsulating security payload) to this BU (IP packet) so that the receiving side (HA) can recognize the key used for the encryption (i,e., so that the decryption can be done on the receiving side). Note that there is the necessity of separately encrypting the key to be distributed in a way of being contained in the BA (the key used for the AH can be also diverted) in the case of applying only the AH.
   The AH or the ESP contains the field for the SPI (security parameters index), and hence the data for designating the key used for the encryption thereof is set in this field. Herein, as will hereinafter be described, the IP packet is encrypted with the key (the Nth key) for transmission, so that the data for designating the Nth key is set as the data for designating the key used for the encryption thereof. The protocol control unit 204 transfers the created BU (IP packet containing the key initialization request message) to the encryption/decryption unit 203 (S502).
   The encryption/decryption unit 203 encrypts the BU (IP packet) from the protocol control unit 204 (S504) by referring to the key management unit 202 (by use of the key (the Nth key) for transmission) (S503). The method of this encryption has already been mentioned. The encryption/decryption unit 203 transfers the encrypted BU (IP packet) to the packet transmitting/receiving unit 201 (S505).
   The packet transmitting/receiving unit 201 transmits the BU (IP packet) from the encryption/decryption unit 203 to the key transmitting device (HA) 100 (S506).
   As shown in FIGS. 23 and 28, the key transmitting device (HA) 100 receives the BU (IP packet containing the key initialization requestmessage) from the key receiving device (MN) 200 (S507), and extracts an SPI value from this received packet (S508). Alternatively, the encryption/decryption unit may also extract this SPI value. Then, the key generation and the initialization of the setting are conducted.
   Concretely, the packet transmitting/receiving unit 101, if this received packet has been encrypted, transfers it to the encryption/decryption unit 103 (S509). The encryption/decryption unit 103 refers to the SPI value of the received packet and the generation/management unit 102, decrypts the packet with the key (which is herein the Nth key) designated by this SPI value (S510) and, after the process of the registration request (BU) , transfers the decrypted packet and the SPI value to the protocol control unit 104 (S511).
   The protocol control unit 104 refers to the key generation/management unit 102 (S512) and collates the key-SPI value table with the extracted SPI value, thereby judging which key the packet from the encryption/decryption unit 103 is encrypted with (S513). Then, the protocol control unit 104, if judging this to be such an implication that it has been encrypted by use of the initialization key, notifies the key generation/management unit 102 of this (S514).
   The key generation/management unit 102 generates the new key (the (N+1)th key) (S515) (or the new key is obtained by some means. For instance, an external key generation unit is requested to generate the key, and a message containing this key is obtained, or, the key is read from a self-possessed or externally-possessed key database, etc.). The key generation management unit 102 initializes the key setting and also initializes the key-SPI mapping table (S516, S517). Concretely, the key generation/management unit 102 newly sets the (N+1) th key and the initialization key as the decryption keys (for receipt) , and deletes the (N-1) th key. Further, the key generation/management unit 102 sets afresh the initialization key as the encryption key (for transmission), and deletes the (N-1)th key. Note that the initialization key is dealt with as the (N-1) th key, and the initialization key is deleted when updating the key next time. Then, the key generation/management unit 102, after updating the key setting, transfers the created new key (the (N+1)th key) to the protocol control unit 104 (S518).
   The protocol control unit 104 creates the registration reply (BA) containing the key distribution message (S519). In the present embodiment, Mobile IPv6 is used, and hence, for example, the protocol control unit 104 creates the BA (IP packet) in which the key distribution message (containing the new key) and the BA are set (or placed) in an extension header field (or a payload field).
   This BA (IP packet) is, as will be described later on, encrypted by the encryption/decryption unit 103, and therefore the protocol control unit 104 applies the AH (authentication header) or the ESP (encapsulating security payload) to this BA (IP packet) so that the receiving side can recognize the key used for the encryption (i.e. , so that the decryption can be done on the receiving side). Note that there is a necessity of separately encrypting the key to be distributed in a way of being contained in the BA (the key used for the AH can be also diverted) in the case of applying only the AH. The AH or the ESP contains the field for SPI (security parameters index) , and hence the data for designating the key used for the encryption thereof is set in this field.
   Herein, as will hereinafter be described, the IP packet is encrypted with the key (the initialization key) for transmission, so that the data for designating the initialization key is set as the data for designating the key used for the encryption thereof. The protocol control unit 104 transfers the created BA (IP packet) to the encryption/decryption unit 103 (S520).
   The encryption/decryption unit 103 encrypts the BA (IP packet) (S522) by referring to the key generation/management unit 102 (by use of the key (the initialization key) for transmission) (S521). Themethod of this encryption has already been mentioned. The encryption/decryption unit 103 transfers the encrypted IP packet to the packet transmitting/receiving unit 101 (S523).
   The packet transmitting/receiving unit 101 transmits the IP packet from the encryption/decryption unit 103 to the key receiving device (MN) 200 (S523).
   As shown in FIGS. 7 and 18, the key receiving device (MN) 200 receives the BA (IP packet to which the key distribution message is added) from the key transmitting device (HA) 100 (S122). The packet transmitting/receiving unit 201, if the received packet has been encrypted, transfers it to the encryption/decryption unit 203 (5123). The encryption/decryption unit 203 refers to the SPI value of the received packet and the key management unit 202 (S124), decrypts the packet with the key (which is herein the initialization key) designated by this SPI value (S125) and transfers it to the protocol control unit 204 (S126).
   The protocol control unit 204 judges a content of the packet from the encryption/decryption unit 203 (S127), extracts, if it is the key distribution message, the key (the new (N+1) th key generated in the HA) , and transfers the extracted key to the key management unit 202 (S128).
   The key management unit 202 sets the extracted new key afresh (in addition to the initialization key) as the decryption key (for receipt) (S129). Further, the key management unit 202 sets the extracted new key afresh as the encryption key (for transmission), and deletes the initialization key that has been set for transmission (the initialization key itself is not deleted).
(9) Example of the operation of HA in a case where the key transmitting side device (HA) judges the updating of the key
   FIG. 14 is a sequence diagram for explaining the procedure in which the key transmitting side device (HA) judges the key updating and distributes the dynamic key (common key). FIG. 7 is the sequence diagram in which the attention is directed to the key receiving device (MN). FIG. 15 is the sequence diagram in which the attention is directed to the key transmitting device (HA). FIG. 18 is the flowchart for explaining the outline of processes in the key receiving device (MN). FIG. 19 is the flowchart for explaining the outline of processes in the key transmitting device (HA). FIG. 28 is a flowchart for explaining the outline of processes in the key transmitting device (HA).
   Herein, it is assumed that the key update timer be built in the key generation/management unit 102 of the key transmitting device (HA) 100 in order for the key transmitting device (HA) 100 to judge the key updating (timing), and that the key distribution message be transmitted together with the BA message of Mobile IPv6. This key update timer enables the key to be updated with a fixed period. Further, it is assumed that the key transmitting device (HA) 100 retains the (N-1) th key and the Nth key, and that the (N+1) th key be generated in the key transmitting device (HA) 100 and be distributed to the key receiving device (MN) 200.
   As shown in FIG. 24, when the key update timer of the key transmitting device (HA) 100 expires in the key generation/management unit 102 (5600), the protocol control unit 104 is notified of this (S601), and the protocol control unit 104 retains this for every key receiving device (MN) 200. For instance, the protocol control unit 104 sets ON a key update timer expiration flag for the key receiving device (MN) 200 concerned.
   The key transmitting device (HA) 100, upon receiving the BU (this contains none of the predetermined messages) from the key receiving device (MN) 200, executes the BU processing (S602), and extracts an SPI value from the received packet (S613). Then, the encryption/decryption unit 103 refers to the SPI value of he received packet and to the key generation/management unit 102, and decrypts the packet with the key (which is herein the Nth key) designated by this SPI value (S614).
   The protocol control unit 104 collates the SPI value with the key-SPI value table by referring to the key generation/management unit 102, thereby judging which key the received packet is encrypted with (S615). Then, the protocol control unit 104, if judging this to be such an implication that it has been encrypted by use of the Nth key (S616), judges whether the key update timer of the key receiving device (MN) 200 as a BU sender thereof expires or not (S617).
   If the key update timer concerned expires (S617: Yes) (for example, if the key update timer expiration flag for the key receiving device (MN) 200 concerned is set ON), the protocol control unit 104, on the occasion of creating the BA, requests the key generation/management unit 102 to update the key.
   The key generation/management unit 102 generates the new key (the (N+1) th key) (S603) (or, the new key is obtained by some means. For instance, the external key generation unit is requested to generate the key, and this is obtained, or, the key is read from the self-possessed or externally-possessed key database, etc.). The key generation/management unit 102 updates the key setting, and also updates the key-SPI mapping able (S604, S605).
   Concretely, the (N+1) th key is set afresh as the decryption key (for receipt), and the (N-1) th key is deleted. Further, the Nth key is set afresh as the encryption key (for transmission) , and the (N-1) th key is deleted. Then, the key generation/management unit 102, after updating the key setting, transfers the created new key (the (N+1)th key) to the protocol control unit 104 (S606).
   The protocol control unit 104 creates the registration reply (BA) containing the key distribution message (S607). In the present embodiment, Mobile IPv6 is used, and hence, for example, the protocol control unit 104 creates the BA (IPpacket) in which the key distribution message (containing the new key) and the BA are set (or placed) in an extension header field (or a payload field) .
   This BA (IP packet) is, as will be described later on, encrypted by the encryption/decryption unit 103, and accordingly the protocol control unit 104 applies the AH (authentication header) or the ESP (encapsulating security payload) to this BA (IP packet) so that the receiving side can recognize the key used for the encryption (i.e. , so that the decryption can be done on the receiving side). Note that there is a necessity of separately encrypting the key to be distributed in a way of being contained in the BA (the key used for the AH can be also diverted) in the case of applying only the AH.
   Herein, as will hereinafter be described, the IP packet is encrypted with the key (the (N-1) th key) for transmission, so that the data for designating the (N-1) th key is set as the data for designating the key used for the encryption thereof. The protocol control unit 104 transfers the created BA (IP packet) to the encryption/decryption unit 103 (S608).
   The encryption/decryption unit 103 encrypts the BA (IP packet) (S610) by referring to the key generation/management unit 102 (by use of the key (N-1) th key) for transmission) (S609). The method of this encryption has already been mentioned. The encryption/decryption unit 103 transfers the encrypted IP packet to the packet transmitting/receiving unit 101 (S611).
   The packet transmitting/receiving unit 101 transmits the IP packet (IP packet containing the key distribution message) from the encryption/decryption unit 103 to the key receiving device (MN) (S612). Note that upon a completion of the transmission of the BA, the key update timer expiration flag for the key receiving device (MN) 200 concerned is set OFF.
   As shown in FIGS. 7 and 18, the key receiving device (MN) 200 receives the BA (IP packet to which the key distribution message is added) from the key transmitting device (HA) 100 (S122). The key receiving device (MN) 200 sets the key contained in this IP packet as an encryption key (for transmission)/decryption key (for receipt) (S129).
   Concretely, the packet transmitting/receiving unit 201, if the received packet has been encrypted, transfers it to the encryption/decryption unit 203 (S123). The encryption/decryption unit 203 refers to the SPI value of the received packet and the key management unit 202 (S124), decrypts the packet with the key (which is herein the (N-1) th key) designated by this SPI value (S125) and transfers it to the protocol control unit 204 (S126).
   The protocol control unit 204 judges a content of the packet from the encryption/decryption unit 203 (S127), extracts, if it is the key distribution message, the key (the new (N+1) th key generated in the HA), and transfers the extracted key to the key management unit 202 (S128).
   The key management unit 202 sets the extracted new key afresh as the decryption key (for receipt) (S129). Further, the key management unit 202 sets the extracted new key afresh as the encryption key (for transmission), and deletes the key that has been set for transmission.
(10) Example of the operation of MN in a case where the key distribution message is discarded
   FIG. 25 is a sequence diagram for explaining a procedure of distributing the dynamic key (common key) by the key resending requestmessage from the key receiving device (MN). FIGS. 26 6 and 7 are sequence diagrams in which the attention is directed to the key receiving device (MN). FIG. 27 is a sequence diagram in which the attention is directed to the key transmitting device (HA).
   Herein, it is assumed that the BA (IP packet) including the key distribution message (containing the (N+1)th key) from the key transmitting device (HA) 100 be discarded midway without arriving at the key receiving device (MN) 200 (see FIGS. 22 and 26). In this case, it comes to a state wherein the key to be dynamically updated by only the key transmitting side device (HA) 100, is updated (see FIG. 16). FIG. 28 is a flowchart for explaining an outline of processes in the key transmitting device (HA).
   As shown in FIGS. 25 and 26, the key receiving device (MN) 200, upon sensing that the BA (IP packet) for the BU (IP packet) transmitted to the key transmitting device (HA) 100 is not received (for example, the BA is not received within a fixed period after transmitting the BU) (S700), creates the BU (IP packet containing the key resending request message) for resending in the same way as the aforementioned key update request message, etc. with the protocol control unit 204 (S701) , and transfers this to the encryption/decryption unit 203 (S702).
   The encryption/decryption unit 203 encrypts the BU (IP packet) from the protocol control unit 204 (S704) by referring to the key management unit 202 (by use ot the key (Nth key) for transmission) (S703). The method of this encryption has already been mentioned. The encryption/decryption unit 203 transfers the encrypted BU (IP packet) to the packet transmitting/receiving unit 201 (S705).
   The packet transmitting/receiving unit 201 transmits the BU (IP packet)from the encryption/decryption unit 203 to the key transmitting device (HA) 100 (S706).
   As shown in FIG. 27, the key transmitting device (HA) 100, upon receiving the BU (that does not contain the key resending request message) from the key receiving device (MN) 300 (S707), extracts an SPI value from this received packet (S708). Alternatively, the encryption/decryption unit may also extract this SPI value.
   Concretely, the packet transmitting/receiving unit 101, if this received packet has been encrypted, transfers it to the encryption/decryption unit 103 (S709). The encryption/decryption unit 103 refers to the SPI value of the received packet and the generation/management unit 102 (S710), decrypts the packet with the key (which is herein the Nth key) designated by this SPI value (S711) and, after the process of the registration request (BU) , transfers the decrypted packet and the SPI value to the protocol control unit 104 (S712).
   The protocol control unit 104 refers to the key generation/management unit 102 (S713) and collates the key-SPI value table with the extracted SPI value, thereby judging which key the packet from the encryption/decryption unit 103 is encrypted with (S714). Then, the protocol control unit 104, if it is the Nth key, can judge that the key receiving device (MN) 200 does not receive the (N+1)th key (the most-updated key) (which corresponds to a receipt of the key resending request message) , and notifies the key generation/management unit 102 of this (S715).
   The key generation/management unit 102 transfers the most-updated key (the (N+1) th key) distributed last time but discarded midway without generating a new key, to the protocol control unit 104 (S716).
   The protocol control unit 104 creates the key distribution message in the same way as the above (S717) . The protocol control unit 104 transfers the created BA (IP packet) to the encryption/decryption unit 103 (S718).
   The encryption/decryption unit 103 encrypts the BA (IP packet) (S720) by referring to the key generation/management unit 102 (by use of the key (Nth key) for transmission) (S719). The method of this encryption has already been mentioned. The encryption/decryption unit 102 transfers the encrypted BA (IP packet) to the packet transmitting/receiving unit 101 (S721).
   The packet transmitting/receiving unit 101 transmits the BA (IP packet) from the encryption/decryption unit to the key receiving device (MN) 200 (S722).
   As shown in FIGS. 7 and 18, the key receiving device (MN) 200 receives the BA (IP packet to which the key distribution message is added) from the key transmitting device (HA) 100 (S122). The key receiving device (MN) 200 sets the key contained in the IP packet as the encryption key (for transmission)/decryption key (for receipt) in the same way as the above (S123 ~ S129).
   As described above, in the present example of the operation, the key transmitting side device (HA) 100 uses the one-generation-anterior dynamic key as the encryption key (for transmission) , whereby the communications become possible even if the dynamic key distribution message (which is also called the key distribution message) is discarded.
(11) Key initialization procedure at the time of a fault, etc. in the key transmitting side device (HA)
   The key initialization procedure at the time of a fault, etc. in the key transmitting device (HA) 100 is as follows.

Herein, it is assumed that all the to-be-dynamically-updated keys (the Nth key and the (N-1) th key) of the key transmitting device (HA) be lost due to the fault, etc. in the key transmitting device (HA) 100, and that only the key for initialization be set. On the other hand, it is assumed that the key receiving device (MN) retains the to-be-dynamically-updated keys (the Nth key and the (N-1) th key).

The key receiving device (MN) 100, upon detecting that the BA (IP packet) for the BU (IP packet containing none of the key update request message and so on) transmitted to the key transmitting device (HA) 100 is not received either after the fixed period, as it is considered that there is the fault, etc. in the key transmitting device (HA) 100, resends the BU (IP packet that does not contain the key update request message).

The key receiving device (MN) 200, upon detecting that the BA for the resent BU (IP packet) is not received either after the fixed period, initializes the setting of the key to be dynamically updated, generates the BU as shown in FIG. 5 (S501 ~ S505), and transmits it to the key transmitting device (HA) 100 (S506).

The key transmitting device (HA) 100, as shown in FIGS. 22 and 23, upon judging this to be such an implication that the BU from the key receiving device (MN) has been encrypted by use of the initialization key (S507 ~ S514), executes the processes of generating the key, etc. in the same way as the above (S515 ~ S518), adds the key distribution message containing the most-updated key to the BA (S519), and transmits it to the key receiving device (MN) (S520 ~ S524).

As shown in FIGS. 7 and 18, the key receiving device (MN), upon receiving the BA to which the key distribution message has been added (5122), sets the key contained therein as the encryption key (for transmission) /decryption key (for receipt) (S123 ~ S129). This is the same as what has already been stated.

As described above, according to the present example of the operation, the key receiving device (MN) 200 resends the key update requestmessage or the massage corresponding thereto, thereby enabling a return to the normal state (a state where the most-updated key is set for transmission and receipt of the key receiving device (MN) 200). Further, in case the key distribution message does not reach the key receiving device as a reply even by resending the key update request message, the key receiving device (MN) 200 performs initialization by transmitting the key initialization request message to the key transmitting device (HA) 100.

As described above, in the present example of the operation, in case there occurs discordance between the dynamic keys of the key receiving side device and the key transmitting side device due to the fault, etc. in the key receiving side device, the key receiving side device transmits the dynamic key initialization message or the message corresponding thereto, thereby enabling both of the dynamic keys to be initialized.

Next, modified examples will be explained.

In the two embodiments described above, the explanation was made such that the communications between the key transmitting device and the key are the communications as on Mobile IPv6, however, the present invention is not limited to this. A variety of communications can be applied as the communications between the key transmitting device and the key receiving device. For instance, the communications between the key transmitting device and the key receiving device may be communications on Mobile IPv4. In this case, Registration Request as a substitute for the BU of IPv6 is used as the registration request, and Registration Reply as a substitute for the BA of IPv6 is used as the registration reply, respectively. They are set (or placed) in, for instance, the payload field of the IP packet.

Further, in the two embodiments described above, the explanation was made such that the BU and the predetermined message (or only the BU) are transmitted from the key transmitting device (HA) from the key receiving device (MN) 200, and, corresponding thereto, the key transmitting device (HA) 100 distributes the key distribution message to the key receiving device (MN) 200, however, the present invention is not limited to this. For example, only the predetermined message (for example, the key initialization request message) is transmitted to the key transmitting device (HA) from the key receiving device (MN) 200, and, corresponding to this, the key transmitting device (HA) 100 may distribute the key distribution message to the key receiving device (MN) 200.

Further, in the two embodiments described above, the explanation was made such that the key transmitting device (HA) 100 and the key receiving device (MN) 200, however, the present invention is not limited to this. For instance, an A-key of an (N-1) th generation may be set as the key for transmission in the key transmitting device (HA) 100, and a B-key of an Nth generation may be set as the key for transmission in the key receiving device (MN) 200. Then, the B-keys of the Nth and (N-1) th generations may also be set as the keys for receipt in the key transmitting device (HA) 100, and then the A-keys of the Nth and (N-1) th generations may be set as those for receipt in the key receiving device (MN) 200, respectively.

Moreover, in the two embodiments described above, the explanations was made such that the key transmitting device is the HA on Mobile IP, and the key receiving device is the MN on Mobile IP, however, the present invention is not limited to this. For example, the key transmitting device may be a server device an the Internet, and the key receiving device may be a client device performing communications with this server.

Note that in the two embodiments described above, the explanation was made such that the BU and the BA are set in the extension header field (or the payload field) of IPv6, however, the present invention is not limited to this. Specifications of IPv6 are at a stage of Draft in the present situation. For instance, in Draft 15 (draft-ietf-mobileip-ipv6-15.txt), both of the BU/BA are included in a terminal option (destination option). Further, in Draft 18 (draft-ietf-mobileip-ipv6-18. txt), both of BU/BA are included in a mobility header (mobility header). Accordingly, the setting (placement) of the BU, BA can be improved properly corresponding to changes in the specifications.

As explained above, according to the present invention, in case one of the two devices that perform the common key encryption communications distributes the encryption key to the other, the encryption communications can continue in the midst of the distribution procedure and even in the case where the encryption key (the key distribution message) is discarded, Further, in the case of performing the one-to-many (encryption communications (for example, the communications between the HA and the MNs on Mobile IP, between the server and the clients connected thereto on the Internet, and so forth) , a load of the HA or the server on the Internet can be reduced. Moreover, in the case of effecting the dynamic key updating for enhancing the security, a cut-off of the communications dues not occur followed by this.

The present invention can be embodiment in a variety of forms without departing from the spirit or the principal features thereof.

Therefore, the embodiments described above are nothing but simple exemplifications in whatever points, and the present invention shall not be limitedly construed due to the descriptions thereof.

## Claims

1. In a system for performing encryption communications using a common key updated at a predetermined timing between a key transmitting device and a key receiving device, a common key encryption communication system comprising:
a key transmitting device including first retaining unit retaining a most-updated encryption key and a one-generation-anterior encryption key as the above common keys, and first setting unit setting a one-generation-anterior encryption key for transmission and a most-updated encryption key and a one-generation-anterior encryption key for receipt, respectively; and
the above key receiving device including second retaining unit retaining a most-updated encryption key and a one-generation-anterior encryption key as the above common keys, and second setting unit setting amost-updated encryption key for transmission, and a most-updated encryption key and a one-generation-anterior key for receipt, respectively.

2. A common key encryption communication system according to claim 1, wherein the above key transmitting device further includes acquisition unit acquiring the encryption key, the above first retaining unit updates and retains the above most-updated encryption key as the one-generation-anterior encryption key and the encryption key acquired by the above acquisition unit as the most-updated encryption key, respectively, and the above first setting unit re-sets the one-generation-anterior encryption key for transmission, and the most-updated, encryption key and the one-generation-anterior encryption key for receipt respectively on the basis of the retained key after being updated by the above first retaining unit.

3. A common key encryption communication system according to claim 2, wherein the above key transmitting device includes generation unit generating the encryption key, and the above acquisition unit acquires the encryption key generated by the above generation unit.

4. A common key encryption communication system according to claim 2, wherein the above key transmitting device further includes first transmitting unit transmitting the encryption key acquired by the above acquisition unit to the key receiving device.

5. A common key encryption communication system according to claim 4, wherein the above key receiving device further includes second receiving unit receiving the encryption key transmitted from the above key transmitting device, in case the above second receiving unit receives the encryption key, the above second retaining unit respectively updates and retains the above most-updated encryption key as the one-generation-anterior encryption key and the encryption key received by the above second receiving unit as the most-updated encryption key, and the above second setting unit respectively re-sets the most-updated encryption key for transmission, and the most-updated encryption key and the one-generation-anterior encryption key for receipt on the basis of the retained key after being updated by the above second retaining unit.

6. A common key encryption communication system according to claim 1, wherein the above key receiving device includes second transmitting unit transmitting a predetermined message to the key transmitting device, and the above key transmitting device includes first receiving unit receiving the predetermined message transmitted from the above key receiving device.

7. A common key encryption communication system according to claim 4, wherein the above first and second retaining unit respectively retain the initialization key.

8. A common key encryption communication system according to claim 7, wherein the above key receiving device transmits a key initialization request message as the above predeterminedmessage at a predetermined timing, in case the above key transmitting device receives the key initialization request message transmitted from the above key receiving device, the above acquisition unit acquires the encryption key, and the above first retaining unit respectively updates and retains the common initialization key as the one-generation-anterior encryption key and the encryption key acquired by the above acquisition unit as the most-updated encryption key.

9. A common key encryption communication system according to claim 4, wherein the above key receiving device transmits a key update request message as the above predetermined message at a predetermined timing, in case the above key transmitting device receives a key update request message transmitted from the above key receiving device, the above acquisition unit acquires the encryption key, and the above first retaining unit respectively updates and retains the above common initialization key as the one-generation-anterior encryption key and the encryption key acquired by the above acquisition unit as the most-updated encryption key.

10. A common key encryption communication system according to claim 9, wherein the above key receiving device includes unit determining a key update timing, and said second transmitting unit, in the case of reaching the key update timing, transmits the key update request message to the key transmitting device.

11. A common key encryption communication system according to claim 4, wherein the above key transmitting ' device includes unit determining a key update timing, and said first transmitting unit, in the case of reaching the key update timing, transmits the encryption key acquired by the above acquisition unit to the key receiving device.

12. A common key encryption communication system according to claim 4, wherein the above key receiving device transmits a key resending request message as the above predetermined message at a predetermined timing, and, in case the above key transmitting device receives a key resending request message transmitted from the above key receiving device, the first transmitting unit transmits the encryption key acquired by the above acquisition unit to the key receiving device.

13. A common key encryption communication system according to claim 4 , wherein the above first transmitting unit, in a state where the above first and second retaining unit retain none of the keys, transmits the encryption key acquired by the above acquisition unit to the key receiving device.

14. In a key transmitting device performing encryption communications using a common key updated at a predetermined timing with a key receiving device, a key transmitting device comprising retaining unit retaining a most-updated encryption key and a one-generation-anterior encryption key as the above common keys, and setting unit respectively setting a one-generation-anterior encryption key for transmission, and a most-updated encryption key and a one-generation-anterior encryption key for receipt.

15. In a key receiving device performing encryption communications using a common key updated at a predetermined timing with a key transmitting device, a key receiving device comprising retaining unit retaining a most-updated encryption key and a one-generation-anterior encryption key as the above common keys, and setting unit respectively setting a most-updated encryption key for transmission, and a most-updated encryption key and a one-generation-anterior encryption key for receipt.

16. In a method of performing encryption communications using a common key updated at a predetermined timing between a key transmitting device and a key receiving device, a common key encryption communication method **characterized in that** the key transmitting device retains a most-updated encryption key and a one-generation-anterior encryption key as the above common keys, sets respectively the one-generation-anterior encryption key for transmission and for receipt, and the above key receiving device retains the most-updated encryption key and the one-generation-anterior encryption key as the above common keys, and sets respectively the most-updated encryption key for transmission and the most-updated encryption key and the one-generation-anterior encryption key for receipt.
